# EUROPEAN PATENT SPECIFICATION

(11) **EP 2 890 839 B1**
(45) Date of publication and mention of the grant of the patent: **16.08.2017**
(21) Application number: 13832552.7
(22) Date of filing: 26.08.2013
(51) Int. Cl.: D01F 6/90, D01F 1/07

(54) **POLYAMIDE-POLY(PHENYLENE ETHER) FIBER, ARTICLE, COMPOSITION, AND METHOD**
POLYAMID-POLY(PHENYLENETHER)FASER, ARTIKEL, ZUSAMMENSETZUNG UND VERFAHREN
FIBRE DE POLYAMIDE-POLY(PHÉNYLÈNE ÉTHER), ARTICLE, COMPOSITION ET PROCÉDÉ

(30) Priority: 31.08.2012 US 201261695398 P; 12.10.2012 US 201213650366
(43) Date of publication of application: 08.07.2015
(73) Proprietor: SABIC Global Technologies B.V., 4612 PX Bergen op Zoom (NL)
(72) Inventor: LEE, Jung Ah, Selkirk, New York 12158 (US); TING, Sai-Pei, Selkirk, New York 12158 (US); GUO, Hua, Beijing 100089 (CN)
(74) Representative: Lang, Johannes
(86) International application number: PCT/US2013/056610
(87) International publication number: WO 2014/035877

(56) References cited:
- EP-A1- 0 714 951
- EP-A1- 0 893 479
- EP-B1- 0 369 169
- WO-A2-2011/087586
- US-A- 5 357 003
- US-A- 6 166 115

## Description

### BACKGROUND OF THE INVENTION

Nylon fibers, including those prepared from the nylons known as polyamide-6 and polyamide-6,6, are widely used in such diverse applications as carpets, ropes, clothing, parachutes, and automotive tires. However, for some applications, particularly industrial applications such as industrial carpet and heat-resistant protective clothing, there is a desire for nylon fibers exhibiting increased flame resistance. And while the addition of flame retardant additives to nylon compositions is known, such additives can be poorly dispersed in the nylon as particles large enough to interfere with the spinning of thin fibers. There remains a need for flame retardant nylon compositions suitable for forming fibers having a variety of thicknesses, including thin fibers.

### BRIEF SUMMARY OF EMBODIMENTS OF THE INVENTION

One embodiment is a fiber comprising a composition comprising the product of melt blending: 58 to 93.9 weight percent of a polyamide selected from the group consisting of polyamide-6, polyamide-6,6, and combinations thereof; 5 to 35 weight percent of a poly(phenylene ether)-polysiloxane block copolymer reaction product comprising a poly(phenylene ether) and a poly(phenylene ether)-polysiloxane block copolymer; 1 to 10 weight percent of a flame retardant comprising a metal dialkylphosphinate; and 0.1 to 2 weight percent of a compatibilizing agent for the polyamide and the poly(phenylene ether)-polysiloxane block copolymer reaction product; wherein all weight percents are based on the total weight of the composition; and wherein the composition comprises a continuous phase comprising the polyamide, and a disperse phase comprising the poly(phenylene ether)-polysiloxane block copolymer reaction product; wherein the disperse phase particles have a mean cross-sectional area less than or equal to 0.9 micrometer², based on the number of disperse phase particles, as measured by scanning electron microscopy.

Another embodiment is a fiber comprising a composition comprising the product of melt blending: 66 to 82.8 weight percent of a polyamide-6,6 having a relative viscosity of 20 to 50 measured at 23°C according to ASTM D789-07 in 90% formic acid; 15 to 25 weight percent of a poly(phenylene ether)-polysiloxane block copolymer reaction product comprising a poly(phenylene ether) and a poly(phenylene ether)-polysiloxane block copolymer; wherein the poly(phenylene ether)-polysiloxane block copolymer comprises a poly(phenylene ether) block comprising 2,6-dimethyl-1,4-phenylene ether repeating units, 2,3,6-trimethyl-1,4-phenylene ether repeating units, or a combination thereof; wherein the poly(phenylene ether)-polysiloxane block copolymer comprises a polysiloxane block comprising repeating units having the structure 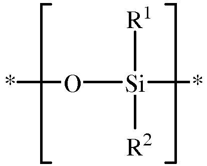 wherein each occurrence of R¹ and R² is independently hydrogen, C₁-C₁₂ hydrocarbyl, or C₁-C₁₂ halohydrocarbyl; and wherein the polysiloxane block further comprises a terminal unit having the structure 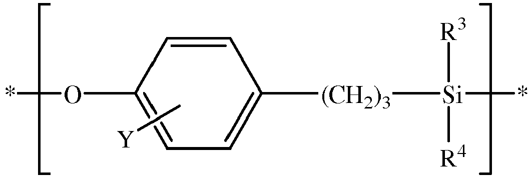 wherein Y is hydrogen, C₁-C₁₂ hydrocarbyl, C₁-C₁₂ hydrocarbyloxy, or halogen, and wherein each occurrence of R³ and R⁴ is independently hydrogen, C₁-C₁₂ hydrocarbyl, or C₁-C₁₂ halohydrocarbyl; 2 to 8 weight percent of a flame retardant consisting of aluminum tris(diethylphosphinate); and 0.2 to 1 weight percent of a compatibilizing agent comprising fumaric acid; wherein all weight percents are based on the total weight of the composition; and wherein the composition comprises a continuous phase comprising the polyamide-6,6, and a disperse phase comprising the poly(phenylene ether)-polysiloxane block copolymer reaction product; wherein the disperse phase particles have a mean cross-sectional area less than or equal to 0.7 micrometer², based on the number of disperse phase particles, as measured by scanning electron microscopy.

Another embodiment is a yarn comprising a fiber described herein.

Another embodiment is a fabric comprising a fiber described herein.

Another embodiment is an article comprising a fiber described herein.

Another embodiment is a composition comprising the product of melt blending: 58 to 93.9 weight percent of a polyamide selected from the group consisting of polyamide-6, polyamide-6,6, and combinations thereof; 5 to 35 weight percent of a poly(phenylene ether)-polysiloxane block copolymer reaction product comprising a poly(phenylene ether) and a poly(phenylene ether)-polysiloxane block copolymer; 1 to 10 weight percent of a flame retardant comprising a metal dialkylphosphinate; and 0.1 to 2 weight percent of a compatibilizing agent for the polyamide and the poly(phenylene ether)-polysiloxane block copolymer reaction product; wherein all weight percents are based on the total weight of the composition; and wherein the composition comprises a continuous phase comprising the polyamide, and a disperse phase comprising the poly(phenylene ether)-polysiloxane block copolymer reaction product; wherein the disperse phase particles have a mean cross-sectional area less than or equal to 0.9 micrometer², based on the number of disperse phase particles, as measured by scanning electron microscopy.

Another embodiment is a method of forming a composition, the method comprising: melt blending 58 to 93.9 weight percent of a polyamide selected from the group consisting of polyamide-6, polyamide-6,6, and combinations thereof; 5 to 35 weight percent of a poly(phenylene ether)-polysiloxane block copolymer reaction product comprising a poly(phenylene ether) and a poly(phenylene ether)-polysiloxane block copolymer; 1 to 10 weight percent of a flame retardant comprising a metal dialkylphosphinate; and 0.1 to 2 weight percent of a compatibilizing agent for the polyamide and the poly(phenylene ether)-polysiloxane block copolymer reaction product; wherein all weight percents are based on the total weight of the composition; and wherein the composition comprises a continuous phase comprising the polyamide, and a disperse phase comprising the poly(phenylene ether)-polysiloxane block copolymer reaction product; wherein the disperse phase comprises particles having a mean cross-sectional area less than or equal to 0.9 micrometer², as measured by scanning electron microscopy.

Another embodiment is a composition formed by a method described herein.

### BRIEF DESCRIPTION OF THE DRAWINGS

Figure 1 is a scanning electron micrograph of a sample of the Comparative Example 9 composition.
Figure 2 is a scanning electron micrograph of a sample of the Example 2 composition.
Figure 3 is a scanning electron micrograph of a sample of the Comparative Example 2 composition.
Figure 4 is a scanning electron micrograph of a sample of the Example 1 composition.
Figure 5 is a scanning electron micrograph of a sample having the Example 2 composition but prepared in a single compounding step.
Figure 6 is a scanning electron micrograph of a sample of Example 2, which was prepared by a method comprising a first compounding step that forms an intermediate composition with all non-polyamide components and a portion of the polyamide, and a second compounding step in which the intermediate composition is diluted with an equal weight of polyamide.
Figure 7 is a scanning electron micrograph of a sample having the Example 2 composition but prepared in a first compounding step containing all components, and a second compounding step with the same composition.
Figure 8 is a schematic diagram of a fiber spinning apparatus.

### DETAILED DESCRIPTION OF THE INVENTION

The present inventors have determined that flame retardant nylon fibers can be prepared from a composition prepared by melt blending specific amounts of a polyamide, a poly(phenylene ether)-polysiloxane block copolymer reaction product that includes a poly(phenylene ether) and a poly(phenylene ether)-polysiloxane block copolymer, a flame retardant that includes a metal dialkylphosphinate, and a compatibilizing agent. The composition has a continuous phase that includes the polyamide, and a disperse phase that includes the poly(phenylene ether)-polysiloxane block copolymer reaction product. This disperse phase contains small particles that do not interfere with melt spinning of fibers. While not wishing to be bound by any particular theory of operation, the present inventors believe that one factor contributing to the method's improved ability to melt spin flame retardant fibers is the improved dispersion of the metal dialkylphosphinate flame retardant, which in turn improves fiber spinning and reduces clogging of filters in the melt spinning apparatus. Another factor believed to contribute to the improved melt spinning is the reduced concentration of the metal dialkylphosphinate flame retardant relative to polyamide compositions containing metal dialkylphosphinate but lacking the poly(phenylene ether)-polysiloxane block copolymer reaction product. The poly(phenylene ether)-polysiloxane block copolymer reaction product unexpectedly facilitates dispersion of the metal dialkylphosphinate in the polyamide. So, the fiber spinning advantages of the composition are greater than would be expected based on the additive effects of the flame retardant and the poly(phenylene ether)-polysiloxane block copolymer reaction product, each used without the other.

One embodiment is a fiber comprising a composition comprising the product of melt blending: 58 to 93.9 weight percent of a polyamide selected from the group consisting of polyamide-6, polyamide-6,6, and combinations thereof; 5 to 35 weight percent of a poly(phenylene ether)-polysiloxane block copolymer reaction product comprising a poly(phenylene ether) and a poly(phenylene ether)-polysiloxane block copolymer; 1 to 10 weight percent of a flame retardant comprising a metal dialkylphosphinate; and 0.1 to 2 weight percent of a compatibilizing agent for the polyamide and the poly(phenylene ether)-polysiloxane block copolymer reaction product; wherein all weight percents are based on the total weight of the composition; and wherein the composition comprises a continuous phase comprising the polyamide, and a disperse phase comprising the poly(phenylene ether)-polysiloxane block copolymer reaction product; wherein the disperse phase comprises particles having a mean cross-sectional area less than or equal to 0.9 micrometer², based on the number of disperse phase particles, as measured by scanning electron microscopy.

The method utilizes a polyamide selected from the group consisting of polyamide-6, polyamide-6,6, and combinations thereof. In some embodiments, the polyamide is polyamide-6,6. In some embodiments, the polyamide has a relative viscosity of 20 to 50, specifically 25 to 45, more specifically 30 to 40, measured in 90% formic acid according to ASTM D789-07e1. In some embodiments, the polyamide has an amine end group concentration of less than 100 microequivalents amine end group per gram of polyamide as determined by titration with hydrochloric acid. The amine end group concentration can be 20 to 100 microequivalents per gram, specifically 30 to 80 microequivalents per gram, more specifically 40 to 70 microequivalents per gram. Amine end group content can be determined by dissolving the polyamide in a suitable solvent and titrating with 0.01 normal hydrochloric acid (HCl) solution using a suitable indication method. The amount of amine end groups is calculated based the volume of HCl solution added to the sample, the volume of HCl used for the blank, the molarity of the HCl solution, and the weight of the polyamide sample. Polyamide-6 and polyamide-6,6 are commercially available from a number of sources and methods for their preparation are known.

The polyamide is used in an amount of 58 to 93.9 weight percent, based on the total weight of the composition (that is, the total weight of melt blended components). Within this range, the polyamide amount can be 60 to 85 weight percent, specifically 65 to 80 weight percent, more specifically 70 to 80 weight percent.

In addition to the polyamide, the method utilizes a poly(phenylene ether)-polysiloxane block copolymer reaction product, which in turn comprises a poly(phenylene ether)-polysiloxane block copolymer and a poly(phenylene ether) homopolymer. For brevity, the poly(phenylene ether)-polysiloxane block copolymer reaction product is sometimes referred to herein as the "reaction product". The poly(phenylene ether)-polysiloxane block copolymer reaction product is synthesized by oxidative polymerization of a mixture of monohydric phenol and hydroxyaryl-terminated polysiloxane. This oxidative polymerization produces poly(phenylene ether)-polysiloxane block copolymer as the desired product and poly(phenylene ether) homopolymer as a by-product. It is difficult and unnecessary to separate the poly(phenylene ether) homopolymer from the poly(phenylene ether)-polysiloxane block copolymer. The poly(phenylene ether)-polysiloxane block copolymer is therefore incorporated into the present composition as a "poly(phenylene ether)-polysiloxane block copolymer reaction product" that comprises both the poly(phenylene ether) homopolymer and the poly(phenylene ether)-polysiloxane block copolymer.

The poly(phenylene ether)-polysiloxane block copolymer comprises a poly(phenylene ether) block and a polysiloxane block. The poly(phenylene ether) block is a residue of the polymerization of the monohydric phenol. In some embodiments, the poly(phenylene ether) block comprises phenylene ether repeating units having the structure 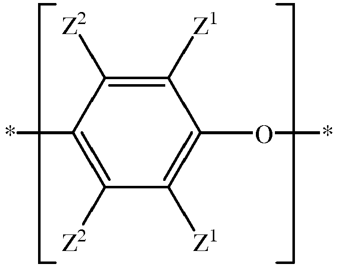 wherein for each repeating unit, each Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each Z² is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atom. In some embodiments, the poly(phenylene ether) block comprises 2,6-dimethyl-1,4-phenylene ether repeating units, that is, repeating units having the structure 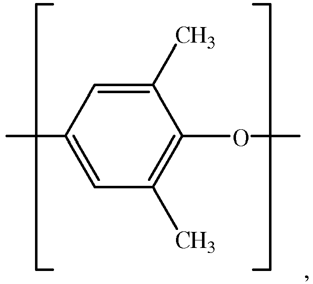 2,3,6-trimethyl-1,4-phenylene ether repeating units, or a combination thereof.

The polysiloxane block is a residue of the hydroxyaryl-terminated polysiloxane. In some embodiments, the polysiloxane block comprises repeating units having the structure 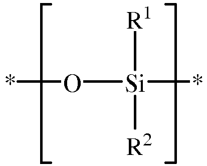 wherein each occurrence of R¹ and R² is independently hydrogen, C₁-C₁₂ hydrocarbyl, or C₁-C₁₂ halohydrocarbyl; and the polysiloxane block further comprises a terminal unit having the structure 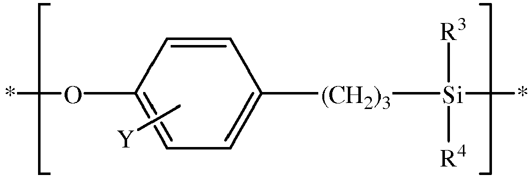 wherein Y is hydrogen, C₁-C₁₂ hydrocarbyl, C₁-C₁₂ hydrocarbyloxy, or halogen, and wherein each occurrence of R³ and R⁴ is independently hydrogen, C₁-C₁₂ hydrocarbyl, or C₁-C₁₂ halohydrocarbyl. In some embodiments, the polysiloxane repeating units comprise dimethylsiloxane (-Si(CH₃)₂O-) units. In some embodiments, the polysiloxane block has the structure 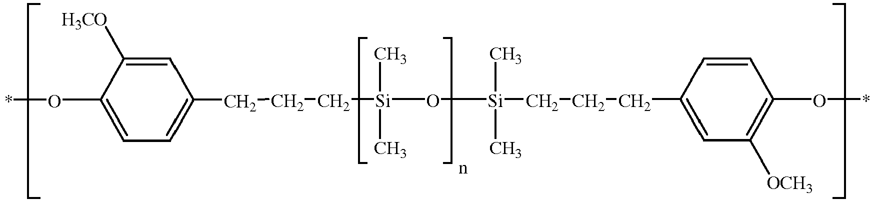 wherein n is, on average, 20 to 60.

The hydroxyaryl-terminated polysiloxane comprises at least one hydroxyaryl terminal group. In some embodiments, the hydroxyaryl-terminated polysiloxane has a single hydroxyaryl terminal group, in which case a poly(phenylene ether)-polysiloxane diblock copolymer is formed. In other embodiments, the hydroxyaryl-terminated polysiloxane has two hydroxyaryl terminal groups, in which case in which case poly(phenylene ether)-polysiloxane diblock copolymer and/or poly(phenylene ether)-polysiloxane-poly(phenylene ether) triblock copolymer are formed. It is also possible for the hydroxyaryl-terminated polysiloxane to have a branched structure that allows three or more hydroxyaryl terminal groups and the formation of corresponding branched block copolymers.

In some embodiments, the hydroxyaryl-terminated polysiloxane comprises, on average, 20 to 80 siloxane repeating units, specifically 25 to 70 siloxane repeating units, more specifically 30 to 60 siloxane repeating units, still more specifically 35 to 50 siloxane repeating units, yet more specifically 40 to 50 siloxane repeating units. The number of siloxane repeating units in the polysiloxane block is essentially unaffected by the copolymerization and isolation conditions, and it is therefore equivalent to the number of siloxane repeating units in the hydroxyaryl-terminated polysiloxane starting material. When not otherwise known, the average number of siloxane repeating units per hydroxylaryl-terminated polysiloxane molecule can be determined by nuclear magnetic resonance (NMR) methods that compare the intensities of signals associated with the siloxane repeating units to those associated with the hydroxyaryl terminal groups. For example, when the hydroxyaryl-terminated polysiloxane is a eugenol-capped polydimethylsiloxane, it is possible to determine the average number of siloxane repeating units by a proton nuclear magnetic resonance (¹H NMR) method in which integrals for the protons of the dimethylsiloxane resonance and the protons of the eugenol methoxy group are compared.

In some embodiments, the poly(phenylene ether)-polysiloxane block copolymer reaction product has a weight average molecular weight of at least 30,000 atomic mass units. For example, the reaction product can have a weight average molecular weight of 30,000 to 150,000 atomic mass units, specifically 35,000 to 120,000 atomic mass units, more specifically 40,000 to 90,000 atomic mass units, even more specifically 45,000 to 70,000 atomic mass units. In some embodiments, the poly(phenylene ether)-polysiloxane block copolymer reaction product has a number average molecular weight of 10,000 to 50,000 atomic mass units, specifically 10,000 to 30,000 atomic mass units, more specifically 14,000 to 24,000 atomic mass units.

In some embodiments, the poly(phenylene ether)-polysiloxane block copolymer reaction product has an intrinsic viscosity of at least 0.3 deciliter per gram, as measured by Ubbelohde viscometer at 25°C in chloroform. In some embodiments, the intrinsic viscosity is 0.3 to 0.5 deciliter per gram, specifically 0.31 to 0.5 deciliter per gram, more specifically 0.35 to 0.47 deciliter per gram.

One indication of the efficiency with which the hydroxyaryl-terminated polysiloxane is incorporated into block copolymer is the low concentration of so-called poly(phenylene ether) "tail" groups in the reaction product. In a homopolymerization of 2,6-dimethylphenol, a large fraction of product molecules have a so-called head-to-tail structure in which the linear product molecule is terminated on one end by a 3,5-dimethyl-4-hydroxyphenyl "head" and on the other end by a 2,6-dimethylphenoxy "tail". Thus, when the monohydric phenol consists of 2,6-dimethylphenol, the poly(phenylene ether) tail group has the structure 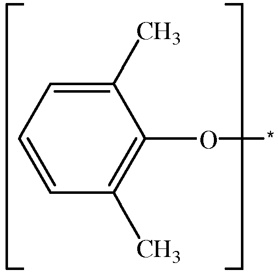 wherein the 3-, 4-, and 5-positions of the ring are substituted with hydrogen atoms (that is, the term "2,6-dimethylphenoxy" refers to a monovalent group and does not encompass divalent 2,6-dimethyl-1,4-phenylene ether groups). In a copolymerization of monohydric phenol with hydroxyaryl-terminated polysiloxane, incorporation of the hydroxyaryl-terminated polysiloxane into block copolymer will reduce the concentration of phenylene ether "tail" groups. Thus, in some embodiments, the monohydric phenol consists of 2,6-dimethylphenol, and the reaction product of comprises less than or equal to 0.4 weight percent, specifically 0.1 to 0.4 weight percent, of 2,6-dimethylphenoxy groups, based on the weight of the reaction product. The 2,6-dimethylphenoxy tail end groups are characteristic of poly(2,6-dimethyl-1,4-phenylene ether) homopolymer with a head-to-tail (hydroxy-monoterminated) structure in which the linear product molecule is terminated on one end by a 3,5-dimethyl-4-hydroxyphenyl "head" and on the other end by a 2,6-dimethylphenoxy "tail". So, the low concentration of 2,6-dimethylphenoxy tail end groups is an indication that the reaction product comprises a reduced concentration of such monofunctional homopolymer and an increased concentration of the desired poly(phenylene ether)-polysiloxane block copolymer.

The poly(phenylene ether)-polysiloxane block copolymer reaction product can further include groups derived from a diphenoquinone, which is itself an oxidation product of the monohydric phenol. For example, when the monohydric phenol is 2,6-dimethylphenol, the diphenoquinone is 3,3',5,5'-tetramethyl-4,4'-diphenoquinone. During the build phase of the copolymerization, the diphenoquinone is typically incorporated into the "tail" end of a head-to-tail poly(phenylene ether) as the corresponding biphenyl group. Through further reactions, the terminal biphenyl group can become an internal biphenyl group in the poly(phenylene ether) chain. In some embodiments, the monohydric phenol consists of 2,6-dimethylphenol, and the reaction product comprises 0.1 to 2.0 weight percent, and specifically 1.1 to 2.0 weight percent, of 2,6-dimethyl-4-(3,5-dimethyl-4-hydroxyphenyl)-phenoxy ("biphenyl") groups. The biphenyl groups are present only in bifunctional (head-to-head or hydroxyl-diterminated) structure. So, the low concentration of biphenyl group is an indication that the reaction product comprises a reduced concentration of such bifunctional homopolymer and an increased concentration of the desired poly(phenylene ether)-polysiloxane block copolymer.

The oxidative copolymerization can be conducted with a reaction time greater than or equal to 110 minutes. The reaction time is the elapsed time between initiation and termination of oxygen flow. (Although, for brevity, the description herein repeatedly refers to "oxygen" or "oxygen flow", it will be understood that any oxygen-containing gas, including air, can be used as the oxygen source.) In some embodiments, the reaction time is 110 to 300 minutes, specifically 140 to 250 minutes, more specifically 170 to 220 minutes.

The oxidative copolymerization can include a "build time", which is the time between completion of monomer addition and termination of oxygen flow. In some embodiments, the reaction time comprises a build time of 80 to 160 minutes. In some embodiments, the reaction temperature during at least part of the build time can be 40 to 60°C, specifically 45 to 55°C.

The poly(phenylene ether)-polysiloxane block copolymer reaction product can be isolated from solution by an isolation procedure that minimizes volatile and nonvolatile contaminants. For example, in some embodiments, the reaction product comprises less than or equal to 1 weight percent of total volatiles, specifically 0.2 to 1 weight percent of total volatiles. In some embodiments, the monomer mixture is oxidatively copolymerized in the presence of a catalyst comprising a metal (such as copper or manganese), and the poly(phenylene ether)-polysiloxane block copolymer reaction product comprises less than or equal to 100 parts per million by weight of the metal, specifically 5 to 100 parts per million by weight of the metal, more specifically 10 to 50 parts per million by weight of the metal, even more specifically 20 to 50 parts per million by weight of the metal, based on the weight of the poly(phenylene ether)-polysiloxane block copolymer reaction product.

Certain isolation procedures make it possible to assure that the poly(phenylene ether)-polysiloxane block copolymer reaction product is essentially free of residual hydroxyaryl-terminated polysiloxane starting material. In other words, these isolation procedures assure that the polysiloxane content of the reaction product consists essentially of the polysiloxane blocks of poly(phenylene ether)-polysiloxane block copolymer. After termination of the copolymerization reaction, the poly(phenylene ether)-polysiloxane block copolymer reaction product can be isolated from solution using methods known in the art for isolating poly(phenylene ether)s from solution. For example, the poly(phenylene ether)-polysiloxane block copolymer reaction product can be isolated by precipitation with an antisolvent comprising at least 50 weight percent of one or more C₁-C₆ alkanols, such as methanol, ethanol, n-propanol, or isopropanol. The use of an isopropanol-containing antisolvent is advantageous because isopropanol is a good solvent for unreacted hydroxyaryl-terminated polysiloxane. Therefore, precipitation and/or washing with an isopropanol-containing antisolvent (e.g., isopropanol alone) substantially remove hydroxyaryl-terminated polysiloxane from the isolated product. Thus, in some embodiments the poly(phenylene ether)-polysiloxane block copolymer reaction product comprises less than or equal to 1.5 weight percent of the hydroxyaryl-terminated polysiloxane, specifically less than or equal to 1 weight percent of the hydroxyaryl-terminated polysiloxane, more specifically less than or equal to 0.5 weight percent of the hydroxyaryl-terminated polysiloxane, based on the total weight of the poly(phenylene ether)-polysiloxane block copolymer reaction product. In some embodiments, the composition comprises less than or equal to 20 parts by weight of hydroxyaryl-terminated polysiloxane not covalently bound in the poly(phenylene ether)-polysiloxane block copolymer for each 100 parts by weight of hydroxyaryl-terminated polysiloxane covalently bound in the poly(phenylene ether)-polysiloxane block copolymer. Within this limit, the amount of hydroxyaryl-terminated polysiloxane not covalently bound in the poly(phenylene ether)-polysiloxane block copolymer can be less than or equal to 10 parts by weight, specifically less than or equal to 5 parts by weight, more specifically less than or equal to 2 parts by weight, even more specifically less than or equal to 1 part by weight.

In some embodiments, the poly(phenylene ether)-polysiloxane block copolymer reaction product incorporates greater than 75 weight percent, of the hydroxyaryl-terminated polysiloxane starting material into the poly(phenylene ether)-polysiloxane block copolymer. Specifically, the amount of the hydroxyaryl-terminated polysiloxane incorporated into the poly(phenylene ether)-polysiloxane block copolymer can be at least 80 weight percent, more specifically at least 85 weight percent, still more specifically at least 90 weight percent, yet more specifically at least 95 weight percent.

Additional details relating to the preparation, characterization, and properties of the poly(phenylene ether)-polysiloxane block copolymer reaction product can be found in U.S. Patent No. 8,017,697 to Carrillo et al., and in copending U.S. Patent Application Serial No. 13/169,137 of Carrillo et al., filed June 27, 2011.

The poly(phenylene ether)-polysiloxane block copolymer reaction product comprises 1 to 30 weight percent siloxane repeating units and 70 to 99 weight percent phenylene ether repeating units, based on the total weight of the reaction product. It will be understood that the siloxane repeating units are derived from the hydroxyaryl-terminated polysiloxane, and the phenylene ether repeating units are derived from the monohydric phenol. In some embodiments, such as, for example, when the poly(phenylene ether)-polysiloxane block copolymer reaction product is purified via precipitation in isopropanol, the siloxane repeating units consist essentially of the residue of hydroxyaryl-terminated polysiloxane that has been incorporated into the poly(phenylene ether)-polysiloxane block copolymer.

In some embodiments, the reaction product comprises 1 to 8 weight percent siloxane repeating units and 12 to 99 weight percent phenylene ether repeating units, based on the total weight of the reaction product. Within these ranges, the amount of siloxane repeating units can be 2 to 7 weight percent, specifically 3 to 6 weight percent, more specifically 4 to 5 weight percent; and the amount of phenylene ether repeating units can be 93 to 98 weight percent, specifically 94 to 97 weight percent, more specifically 95 to 96 weight percent.

The reaction product can include relatively small amounts of very low molecular weight species. Thus, in some embodiments, the reaction product comprises less than 25 weight percent of molecules having a molecular weight less than 10,000 atomic mass units, specifically 5 to 25 weight percent of molecules having a molecular weight less than 10,000 atomic mass units, more specifically 7 to 21 weight percent of molecules having a molecular weight less than 10,000 atomic mass units. In some embodiments, the molecules having a molecular weight less than 10,000 atomic mass units comprise, on average, 5 to 10 weight percent siloxane repeating units, specifically 6 to 9 weight percent siloxane repeating units.

Similarly, the reaction product can also include relatively small amounts of very high molecular weight species. Thus, in some embodiments, the reaction product comprises less than 25 weight percent of molecules having a molecular weight greater than 100,000 atomic mass units, specifically 5 to 25 weight percent of molecules having a molecular weight greater than 100,000 atomic mass units, more specifically 7 to 23 weight percent of molecules having a molecular weight greater than 100,000 atomic mass units. In some embodiments, the molecules having a molecular weight greater than 100,000 atomic mass units comprise, on average, 3 to 6 weight percent siloxane repeating units, specifically 4 to 5 weight percent siloxane repeating units.

In a very specific procedure for preparing the poly(phenylene ether)-polysiloxane block copolymer reaction product, the monohydric phenol is 2,6-dimethylphenol; the hydroxyaryl-terminated polysiloxane is a eugenol-capped polydimethylsiloxane comprising 35 to 60 dimethylsiloxane units; the oxidative copolymerization is conducted with a reaction time of 170 to 220 minutes; and the hydroxyaryl-terminated polysiloxane constitutes 2 to 7 weight percent of the combined weight of the monohydric phenol and the hydroxyaryl-terminated polysiloxane.

In some embodiments, the poly(phenylene ether)-polysiloxane block copolymer reaction product comprises 8 to 30 weight percent siloxane repeating units and 70 to 92 weight percent phenylene ether repeating units, based on the total weight of the reaction product. Within these ranges, the amount of siloxane repeating units can be 10 to 27 weight percent, specifically 12 to 24 weight percent, more specifically 14 to 22 weight percent, even more specifically 16 to 20 weight percent; and the amount of phenylene ether repeating units can be 74 to 90 weight percent, specifically 76 to 88 weight percent, more specifically 78 to 86 weight percent, yet more specifically 80 to 84 weight percent.

In some embodiments, the poly(phenylene ether)-polysiloxane block copolymer reaction product comprises 15 to 25 weight percent siloxane repeating units and 75 to 85 weight percent phenylene ether repeating units. Within the range of 15 to 25 weight percent siloxane repeating units, the weight percent of siloxane repeating units can be 16 to 24 weight percent, specifically 17 to 22 weight percent, even more specifically 18 to 20 weight percent. Within the range of 75 to 85 weight percent, the weight percent of phenylene ether repeating units can be 76 to 84 weight percent, specifically 78 to 83 weight percent, more specifically 80 to 82 weight percent. These repeating unit amounts are particularly applicable to reaction product after precipitation from isopropanol, which substantially removes free hydroxyaryl-terminated polysiloxane. In this embodiment, the poly(phenylene ether)-polysiloxane block copolymer reaction product is distinguished from the poly(phenylene ether)-polysiloxane block copolymer reaction product of Carrillo US 2009/0318635 A1, none of which comprises more than 14 weight percent siloxane repeating units.

In a very specific embodiment of the poly(phenylene ether)-polysiloxane block copolymer reaction product, the monohydric phenol is 2,6-dimethylphenol; the hydroxyaryl-terminated polysiloxane is a eugenol-capped polydimethylsiloxane comprising 30 to 60 dimethylsiloxane units; the hydroxyaryl-terminated polysiloxane constitutes 10 to 28 weight percent, specifically 14 to 26 weight percent, more specifically 18 to 24 weight percent of the combined weight of the monohydric phenol and the hydroxyaryl-terminated polysiloxane; the reaction product incorporates greater than 85 weight percent of the hydroxyaryl-terminated polysiloxane into the poly(phenylene ether)-polysiloxane block copolymer; the reaction product comprises 15 to 25 weight percent, specifically 16 to 24 weight percent, more specifically 17 to 22 weight percent, even more specifically 18 to 20 weight percent siloxane repeating units and 75 to 85 weight percent, specifically 76 to 84 weight percent, more specifically 78 to 83 weight percent, even more specifically 80 to 82 weight percent phenylene ether repeating units, based on the total weight of the reaction product; and the reaction product has a weight average molecular weight of 30,000 to 150,000 atomic mass units.

In some embodiments, the poly(phenylene ether)-polysiloxane block copolymer reaction product comprises a poly(phenylene ether), and a poly(phenylene ether)-polysiloxane block copolymer comprising a poly(phenylene ether) block, and a polysiloxane block comprising, on average, 20 to 80 siloxane repeating units, specifically 25 to 70 siloxane repeating units, more specifically 30 to 60 siloxane repeating units, even more specifically 35 to 50 siloxane repeating units, still more specifically 40 to 50 siloxane repeating units; wherein the reaction product comprises greater than 8 to 30 weight percent, specifically 10 to 27 weight percent, more specifically 12 to 24 weight percent, even more specifically 14 to 22 weight percent, yet more specifically 16 to 20 weight percent siloxane repeating units, and 70 to less than 92 weight percent, specifically 74 to 90 weight percent, more specifically 77 to 88 weight percent, even more specifically 78 to 86 weight percent, yet more specifically 84 to 80 weight percent phenylene ether repeating units, based on the total weight of the reaction product; wherein the reaction product is the product of a process comprising oxidatively copolymerizing a monomer mixture comprising a monohydric phenol and a hydroxyaryl-terminated polysiloxane; and wherein the reaction product has a weight average molecular weight of at least 30,000 atomic mass units, specifically 30,000 to 150,000 atomic mass units, more specifically 35,000 to 120,000 atomic mass units, still more specifically 40,000 to 90,000 atomic mass units, yet more specifically 45,000 to 70,000 atomic mass units.

In some embodiments, the poly(phenylene ether)-polysiloxane block copolymer reaction product contributes 0.5 to 2 weight percent of the polysiloxane block to the melt blended composition. In other words, the melt blended composition comprises 0.5 to 2 weight percent of the polysiloxane block, based on the total weight of the composition. Within the range of 0.5 to 2 weight percent, the polysiloxane block amount can be 0.6 to 1.5 weight percent, specifically 0.7 to 1.2 weight percent.

In some embodiments, the poly(phenylene ether)-polysiloxane block copolymer comprises a poly(phenylene ether) block comprising 2,6-dimethyl-1,4-phenylene ether repeating units, 2,3,6-trimethyl-1,4-phenylene ether repeating units, or a combination thereof; the poly(phenylene ether)-polysiloxane block copolymer comprises a polysiloxane block comprising repeating units having the structure 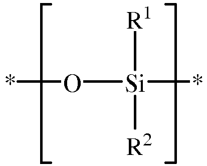 wherein each occurrence of R¹ and R² is independently hydrogen, C₁-C₁₂ hydrocarbyl, or C₁-C₁₂ halohydrocarbyl; and the polysiloxane block further comprises a terminal unit having the structure 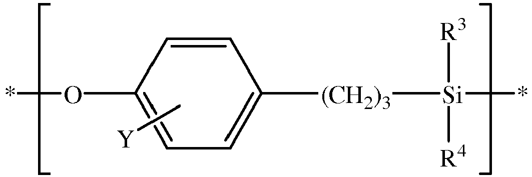 wherein Y is hydrogen, C₁-C₁₂ hydrocarbyl, C₁-C₁₂ hydrocarbyloxy, or halogen, and wherein each occurrence of R³ and R⁴ is independently hydrogen, C₁-C₁₂ hydrocarbyl, or C₁-C₁₂ halohydrocarbyl.

The poly(phenylene ether)-polysiloxane block copolymer reaction product is used in an amount of 5 to 35 weight percent, based on the total weight of the composition. Within this range, the reaction product amount can be 10 to 30 weight percent, specifically 15 to 25 weight percent. In other embodiments, the reaction product amount is 5 to 20 weight percent.

In addition to the polyamide and the poly(phenylene ether)-polysiloxane block copolymer reaction product, the method utilizes a flame retardant comprising a metal dialkylphosphinate. As used herein, the term "metal dialkylphosphinate" refers to a salt comprising at least one metal cation and at least one dialkylphosphinate anion. In some embodiments, the metal dialkylphosphinate has the formula 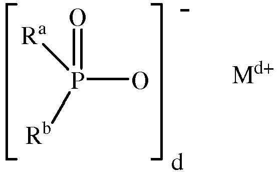 wherein R^{a} and R^{b} are each independently C₁-C₆ alkyl; M is calcium, magnesium, aluminum, or zinc; and d is 2 or 3. Examples of R^{a} and R^{b} include methyl, ethyl, n-propyl, isopropyl, n-butyl, tert-butyl, n-pentyl, and phenyl. In some embodiments, R^{a} and R^{b} are ethyl, M is aluminum, and d is 3 (that is, the metal dialkylphosphinate is aluminum tris(diethylphosphinate)).

In some embodiments, the flame retardant consists of the metal dialkylphosphinate. In some embodiments, the flame retardant consists of aluminum tris(diethylphosphinate).

In other embodiments, the flame retardant comprises other flame retardants in addition to the metal dialkylphosphinate. Such additional flame retardants can include, for example, organophosphate esters, nitrogen-containing flame retardants, metal borates, metal hydroxides, and combinations thereof.

In some embodiments, the flame retardant comprises an organophosphate ester. Exemplary organophosphate ester flame retardants include phosphate esters comprising phenyl groups, substituted phenyl groups, or a combination of phenyl groups and substituted phenyl groups, bis-aryl phosphate esters based upon resorcinol such as, for example, resorcinol bis(diphenyl phosphate), as well as those based upon bisphenols such as, for example, bisphenol A bis(diphenyl phosphate). In some embodiments, the organophosphate ester is selected from tris(alkylphenyl) phosphates (for example, CAS Reg. No. 89492-23-9 or CAS Reg. No. 78-33-1), resorcinol bis(diphenyl phosphate) (CAS Reg. No. 57583-54-7), bisphenol A bis(diphenyl phosphate) (CAS Reg. No. 181028-79-5), triphenyl phosphate (CAS Reg. No. 115-86-6), tris(isopropylphenyl) phosphates (for example, CAS Reg. No. 68937-41-7), and combinations thereof.

In some embodiments the organophosphate ester comprises a bis-aryl phosphate having the formula 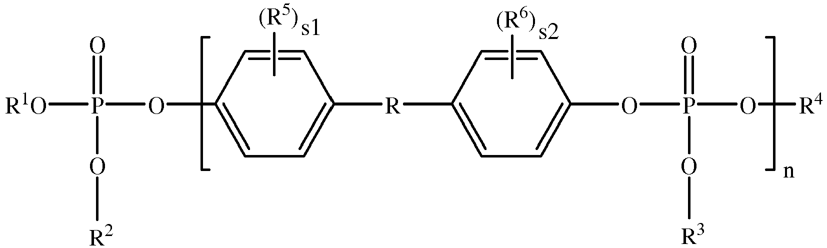 wherein R is independently at each occurrence a C₁-C₁₂ alkylene group; R⁵ and R⁶ are independently at each occurrence a C₁-C₅ alkyl group; R¹, R², and R⁴ are independently a C₁-C₁₂ hydrocarbyl group; R³ is independently at each occurrence a C₁-C₁₂ hydrocarbyl group; n is 1 to 25; and s1 and s2 are independently an integer equal to 0, 1, or 2. In some embodiments OR¹, OR², OR³ and OR⁴ are independently derived from phenol, a monoalkylphenol, a dialkylphenol, or a trialkylphenol.

As readily appreciated by one skilled in the art, the bis-aryl phosphate is derived from a bisphenol. Exemplary bisphenols include 2,2-bis(4-hydroxyphenyl)propane (so-called bisphenol A), 2,2-bis(4-hydroxy-3-methylphenyl)propane, bis(4-hydroxyphenyl)methane, bis(4-hydroxy-3,5-dimethylphenyl)methane and 1,1-bis(4-hydroxyphenyl)ethane. In some embodiments, the bisphenol comprises bisphenol A.

In some embodiments, the flame retardant comprises a nitrogen-containing flame retardant comprising a nitrogen-containing heterocyclic base and a phosphate or pyrophosphate or polyphosphate acid. In some embodiments, the nitrogen-containing flame retardant has the formula 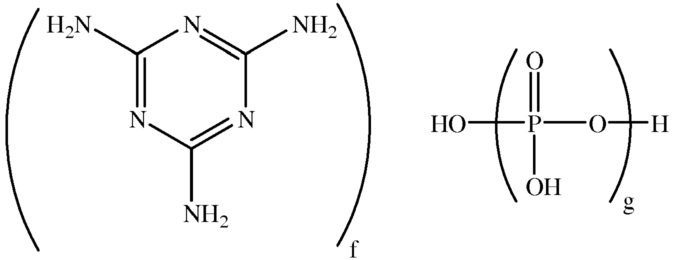 wherein g is 1 to 10,000, and the ratio of f to g is 0.5:1 to 1.7:1, specifically 0.7:1 to 1.3:1, more specifically 0.9:1 to 1.1:1. It will be understood that this formula includes species in which one or more protons are transferred from the phosphate group(s) to the melamine group(s). When g is 1, the nitrogen-containing flame retardant is melamine phosphate (CAS Reg. No. 20208-95-1). When g is 2, the nitrogen-containing flame retardant is melamine pyrophosphate (CAS Reg. No. 15541 60-3). When g is, on average, greater than 2, the nitrogen-containing flame retardant is a melamine polyphosphate (CAS Reg. No. 56386-64-2). In some embodiments, the nitrogen-containing flame retardant is melamine pyrophosphate, melamine polyphosphate, or a mixture thereof. In some embodiments in which the nitrogen-containing flame retardant is melamine polyphosphate, g has an average value of greater than 2 to 10,000, specifically 5 to 1,000, more specifically 10 to 500. In some embodiments in which the nitrogen-containing flame retardant is melamine polyphosphate, g has an average value of greater than 2 to 500. Methods for preparing melamine phosphate, melamine pyrophosphate, and melamine polyphosphate are known in the art, and all are commercially available. For example, melamine polyphosphates may be prepared by reacting polyphosphoric acid and melamine, as described, for example, in U.S. Patent No. 6,025,419 to Kasowski et al., or by heating melamine pyrophosphate under nitrogen at 290°C to constant weight, as described in U.S. Patent No. 6,015,510 to Jacobson et al. In some embodiments, the nitrogen-containing flame retardant comprises melamine cyanurate.

The nitrogen-containing flame retardant can have a low volatility. For example, in some embodiments, the nitrogen-containing flame retardant exhibits less than 1 percent weight loss by thermogravimetric analysis when heated at a rate of 20°C per minute from 25 to 280°C, specifically 25 to 300°C, more specifically 25 to 320°C.

In some embodiments, the flame retardant comprises a metal borate. Suitable metal borates include zinc borate, barium metaborate, magnesium borate, calcium borate, calcium magnesium borate, manganese borate, hydrates of the foregoing metal borates, and combinations thereof.

In some embodiments, the flame retardant comprises a metal hydroxide. Suitable metal hydroxides include all those capable of providing fire retardancy, as well as combinations of such metal hydroxides. The metal hydroxide can be chosen to have substantially no decomposition during processing of the flame retardant thermoplastic composition. Substantially no decomposition is defined herein as amounts of decomposition that do not prevent the flame retardant from providing the desired level of fire retardancy. Exemplary metal hydroxides include magnesium hydroxide (for example, CAS Reg. No. 1309-42-8), aluminum hydroxide (for example, CAS Reg. No. 21645-51-2), cobalt hydroxide (for example, CAS Reg. No. 21041-93-0) and combinations thereof. In some embodiments, the metal hydroxide comprises magnesium hydroxide. In some embodiments it is desirable for the metal hydroxide to contain substantially no water, for example as evidenced by a weight loss of less than 1 weight percent upon drying at 120°C for 1 hour. In some embodiments the metal hydroxide can be coated, for example, with stearic acid or other fatty acid.

The flame retardant is used in an amount of 1 to 10 weight percent, based on the total weight of the composition. Within this range, the flame retardant amount can be 2 to 8 weight percent, specifically 3 to 6 weight percent.

In addition to the polyamide, the poly(phenylene ether)-polysiloxane block copolymer reaction product, and the flame retardant, the method utilizes a compatibilizing agent for the polyamide and the poly(phenylene ether)-polysiloxane block copolymer reaction product. As used herein, the term "compatibilizing agent" refers to a polyfunctional compound that interacts with the poly(phenylene ether)-polysiloxane block copolymer reaction product, the polyamide, or both. This interaction can be chemical (for example, grafting) and/or physical (for example, affecting the surface characteristics of the dispersed phases). In either instance the resulting blend of polyamide and poly(phenylene ether)-polysiloxane block copolymer reaction product exhibits improved compatibility, particularly as evidenced by enhanced impact strength, mold knit line strength, and/or tensile elongation.

Examples of compatibilizing agents that can be employed include liquid diene polymers, epoxy compounds, oxidized polyolefin wax, quinones, organosilane compounds, polyfunctional compounds, functionalized poly(phenylene ether)s, and combinations thereof. Compatibilizing agents are further described in U.S. Patent Nos. 5,132,365 to Gallucci, and 6,593,411 and 7,226,963 to Koevoets et al.

In some embodiments, the compatibilizing agent comprises a polyfunctional compound. Polyfunctional compounds that can be employed as a compatibilizing agent are typically of three types. The first type of polyfunctional compound has in the molecule both (a) a carbon-carbon double bond or a carbon-carbon triple bond and (b) at least one carboxylic acid, anhydride, amide, ester, imide, amino, epoxy, orthoester, or hydroxy group. Examples of such polyfunctional compounds include maleic acid; maleic anhydride; fumaric acid; glycidyl acrylate, itaconic acid; aconitic acid; maleimide; maleic hydrazide; reaction products resulting from a diamine and maleic anhydride, maleic acid, fumaric acid, etc.; dichloro maleic anhydride; maleic acid amide; unsaturated dicarboxylic acids (for example, acrylic acid, butenoic acid, methacrylic acid, ethylacrylic acid, pentenoic acid, decenoic acids, undecenoic acids, dodecenoic acids, linoleic acid, etc.); esters, acid amides or anhydrides of the foregoing unsaturated carboxylic acids; unsaturated alcohols (for example, alkanols, crotyl alcohol, methyl vinyl carbinol, 4-pentene-1-ol, 1,4-hexadiene-3-ol, 3-butene-1,4-diol, 2,5-dimethyl-3-hexene-2,5-diol, and alcohols of the formula CₙH₂ₙ-₅OH, CₙH₂ₙ₋₇OH and CₙH₂ₙ₋₉OH, wherein n is a positive integer from 10 to 30); unsaturated amines resulting from replacing from replacing the -OH group(s) of the above unsaturated alcohols with -NH₂ group(s); and combinations comprising one or more of the foregoing. In some embodiments, the compatibilizing agent comprises maleic anhydride and/or fumaric acid. In some embodiments, the compatibilizing agent comprises fumaric acid.

The second type of polyfunctional compatibilizing agent has both (a) a group represented by the formula (OR) wherein R is hydrogen or an alkyl, aryl, acyl or carbonyl dioxy group and (b) at least two groups each of which can be the same or different selected from carboxylic acid, acid halide, anhydride, acid halide anhydride, ester, orthoester, amide, imido, amino, and various salts thereof. Typical of this group of compatibilizing agents are the aliphatic polycarboxylic acids, acid esters, and acid amides represented by the formula:

(R^{I}O)ₘR' (COOR^{II})ₙ(CONR^{III}R^{IV})ₛ

wherein R' is a linear or branched chain, saturated aliphatic hydrocarbon having 2 to 20, or, more specifically, 2 to 10, carbon atoms; R^{I} is hydrogen or an alkyl, aryl, acyl, or carbonyl dioxy group having 1 to 10, or, more specifically, 1 to 6, or, even more specifically, 1 to 4 carbon atoms; each R^{II} is independently hydrogen or an alkyl or aryl group having 1 to 20, or, more specifically, 1 to 10 carbon atoms; each R^{III} and R^{IV} are independently hydrogen or an alkyl or aryl group having 1 to 10, or, more specifically, 1 to 6, or, even more specifically, 1 to 4, carbon atoms; m is equal to 1 and (n + s) is greater than or equal to 2, or, more specifically, equal to 2 or 3, and n and s are each greater than or equal to zero and wherein (OR^{I}) is alpha or beta to a carbonyl group and at least two carbonyl groups are separated by 2 to 6 carbon atoms. Obviously, R^{I}, R^{II} R^{III}, and R^{IV} cannot be aryl when the respective substituent has less than 6 carbon atoms.

Suitable polycarboxylic acids include, for example, citric acid, malic acid, and agaricic acid, including the various commercial forms thereof, such as for example, the anhydrous and hydrated acids; and combinations comprising one or more of the foregoing. In one embodiment, the compatibilizing agent comprises citric acid. Illustrative of esters useful herein include, for example, acetyl citrate, monostearyl and/or distearyl citrates, and the like. Suitable amides useful herein include, for example, N,N'-diethyl citric acid amide; N-phenyl citric acid amide; N-dodecyl citric acid amide; N,N'-didodecyl citric acid amide; and N-dodecyl malic acid. Derivatives include the salts thereof, including the salts with amines and the alkali and alkaline metal salts. Examples of suitable salts include calcium malate, calcium citrate, potassium malate, and potassium citrate.

The third type of polyfunctional compatibilizing agent has in the molecule both (a) an acid halide group and (b) at least one carboxylic acid, anhydride, ester, epoxy, orthoester, or amide group, preferably a carboxylic acid or anhydride group. Examples of compatibilizing agents within this group include trimellitic anhydride acid chloride, chloroformyl succinic anhydride, chloroformyl succinic acid, chloroformyl glutaric anhydride, chloroformylglutaric acid, chloroacetylsuccinic anhydride, chloroacetylsuccinic acid, trimellitic acid chloride, and chloroacetylglutaric acid. In some embodiments, the compatibilizing agent comprises trimellitic anhydride acid chloride.

In some embodiments, the compatibilizing agent is selected from fumaric acid, maleic acid, maleic anhydride, citric acid, and combinations thereof. Fumaric acid is a presently preferred compatibilizing agent due to its superior effectiveness and low toxicity. Maleic anhydride and maleic acid are also effective at comparable concentrations, however in order to employ them in production processes additional appropriate safety procedures may be required. Citric acid is also useful as a compatibilizing agent; however concentrations at the higher end of disclosed ranges may be required in order to produce comparable results when preparing citric acid compatibilized blends. The foregoing compatibilizing agents may be added directly to the melt blend or pre-reacted with either or both of the poly(phenylene ether) and the polyamide.

The compatibilizing agent is used in an amount of 0.1 to 2 weight percent, based on the total weight of the composition. Within this range, the compatibilizing agent amount can be 0.2 to 1.5 weight percent, specifically 0.3 to 1 weight percent, more specifically 0.3 to 0.5 weight percent.

The composition can, optionally, further include one or more additives known in the thermoplastics art. For example, the composition can, optionally, further comprise an additive chosen from stabilizers, lubricants, processing aids, drip retardants, UV blockers, dyes, pigments, antioxidants, anti-static agents, mineral oil, metal deactivators, antiblocking agents, and the like, and combinations thereof. When present, such additives are typically used in a total amount of less than or equal to 2 weight percent, specifically less than or equal to 1 weight percent. In some embodiments, the composition excludes additives.

In some embodiments, the composition excludes impact modifiers. In some embodiments, the composition excludes any polymer other than the polyamide and the poly(phenylene ether). In some embodiments, the composition excludes glass fibers. In some embodiments, the composition excludes electrically conductive fillers, such as carbon nanotubes and conductive carbon black. In some embodiments, the composition excludes all fillers.

In some embodiments, the method of preparing the composition includes two melt blending steps. In the first melt blending step, the poly(phenylene ether)-polysiloxane block copolymer reaction product, the flame retardant, and the compatibilizing agent are melt blended with 15 to 70 weight percent of the polyamide, based on the weight of the polyamide, to form an intermediate composition. Within the range of 15 to 70 weight percent, the amount of polyamide used in the first melt blending step can be 20 to 60 weight percent, specifically 25 to 50 weight percent, more specifically 30 to 40 weight percent. In the second melt blending step, the intermediate composition is melt blended with the remainder of the polyamide to form the composition. In some embodiments, said melt blending the poly(phenylene ether)-polysiloxane block copolymer reaction product, the flame retardant, and the compatibilizing agent with 15 to 70 weight percent of the polyamide and said melt blending the intermediate composition with the remainder of the polyamide to form the composition are conducted within a single pass through an extruder. In other embodiments, said melt blending the poly(phenylene ether)-polysiloxane block copolymer reaction product, the flame retardant, and the compatibilizing agent with 15 to 70 weight percent of the polyamide is conducted within a first pass through a first extruder, and said melt blending the intermediate composition with the remainder of the polyamide to form the composition is conducted within a second pass through a second extruder that is the same as or different from the first extruder. The melt-blending can be performed using common equipment such as ribbon blenders, Henschel mixers, Banbury mixers, drum tumblers, single-screw extruders, twin-screw extruders, multi-screw extruders, co-kneaders, and the like. For example, the present composition can be prepared by melt-blending the components in a twin-screw extruder at a temperature of 180 to 320°C, specifically 250 to 310°C.

The composition comprises a continuous phase comprising the polyamide, and a disperse phase comprising the poly(phenylene ether)-polysiloxane block copolymer reaction product. The disperse phase particles are small. Specifically, the disperse phase comprises particles having a mean cross-sectional area less than or equal to 0.9 micrometer², specifically less than or equal to 0.7 micrometer², more specifically less than or equal to 0.6 micrometer², even more specifically less than or equal to 0.5 micrometer², still more specifically less than or equal to 0.4 micrometer², as measured by scanning electron microscopy. In some embodiments, the mean cross-sectional area is 0.1 to 0.9 micrometer², specifically 0.2 to 0.7 micrometer², more specifically 0.2 to 0.6 micrometer², even more specifically 0.2 to 0.5 micrometer², yet more specifically 0.2 to 0.4 micrometer². In some embodiments, the mean cross-sectional area is associated with a standard deviation less than or equal to 1 micrometer², specifically less than or equal to 0.8 micrometer², more specifically less than or equal to 0.7 micrometer². In some embodiments, the standard deviation associated with the mean cross-sectional area is 0.2 to 1 micrometer², specifically 0.25 to 0.8 micrometer², more specifically 0.3 to 0.7 micrometer². A procedure for determining mean cross-sectional area and the associated standard deviation is provided in the working examples.

In a very specific embodiment, the fiber comprises a composition comprising the product of melt blending: 66 to 82.8 weight percent of a polyamide-6,6 having a relative viscosity of 20 to 50 measured at 23°C according to ASTM D789-07 in 90% formic acid; 15 to 25 weight percent of a poly(phenylene ether)-polysiloxane block copolymer reaction product comprising a poly(phenylene ether) and a poly(phenylene ether)-polysiloxane block copolymer; wherein the poly(phenylene ether)-polysiloxane block copolymer comprises a poly(phenylene ether) block comprising 2,6-dimethyl-1,4-phenylene ether repeating units, 2,3,6-trimethyl-1,4-phenylene ether repeating units, or a combination thereof; wherein the poly(phenylene ether)-polysiloxane block copolymer comprises a polysiloxane block comprising repeating units having the structure 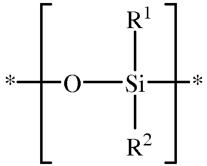 wherein each occurrence of R¹ and R² is independently hydrogen, C₁-C₁₂ hydrocarbyl, or C₁-C₁₂ halohydrocarbyl; and wherein the polysiloxane block further comprises a terminal unit having the structure 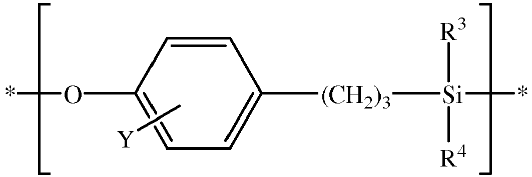 wherein Y is hydrogen, C₁-C₁₂ hydrocarbyl, C₁-C₁₂ hydrocarbyloxy, or halogen, and wherein each occurrence of R³ and R⁴ is independently hydrogen, C₁-C₁₂ hydrocarbyl, or C₁-C₁₂ halohydrocarbyl; 2 to 8 weight percent of a flame retardant consisting of aluminum tris(diethylphosphinate); and 0.2 to 1 weight percent of a compatibilizing agent comprising fumaric acid; wherein all weight percents are based on the total weight of the composition; and wherein the composition comprises a continuous phase comprising the polyamide-6,6, and a disperse phase comprising the poly(phenylene ether)-polysiloxane block copolymer reaction product; wherein the disperse phase comprises particles having a mean cross-sectional area less than or equal to 0.7 micrometer², based on the number of disperse phase particles, as measured by scanning electron microscopy. In some embodiments, said melt blending comprises melt blending the poly(phenylene ether)-polysiloxane block copolymer reaction product, the flame retardant, and the compatibilizing agent with 20 to 60 weight percent of the polyamide-6,6, based on the weight of the polyamide-6,6, to form an intermediate composition, and melt blending the intermediate composition with the remainder of the polyamide-6,6 to form the composition.

The composition is particularly suitable for forming fiber via melt spinning. Melt spinning methods and apparatuses are known in the art. A detailed method for melt spinning the composition is described in the working examples below. While melt spinning is the presently preferred method of forming the fiber, it is also possible to form the fiber by a solution spinning method. Relative to solution spinning, melt spinning has the advantage of avoiding the solvent handling and disposal. The composition makes it possible to prepare fibers at least as thin as 2 denier per filament, which means that 9000 meters of a single continuous fiber have a mass of 2 grams. In some embodiments, the fiber has a thickness in the range of 2 to 10 denier per filament, specifically 2 to 8 denier per filament, more specifically 2 to 6 denier per filament.

The invention includes yarns, fabrics, and articles comprising the fiber described above. The term "yarn" refers to a bundle of at least two fibers, at least one of the fibers being the inventive fiber. As examples of articles, the fiber is useful for make flame retardant carpet and flame retardant clothing.

The invention includes the composition used to form the fiber. Thus, one embodiment is a composition comprising the product of melt blending: 58 to 93.9 weight percent of a polyamide selected from the group consisting of polyamide-6, polyamide-6,6, and combinations thereof; 5 to 35 weight percent of a poly(phenylene ether)-polysiloxane block copolymer reaction product comprising a poly(phenylene ether) and a poly(phenylene ether)-polysiloxane block copolymer; 1 to 10 weight percent of a flame retardant comprising a metal dialkylphosphinate; and 0.1 to 2 weight percent of a compatibilizing agent for the polyamide and the poly(phenylene ether)-polysiloxane block copolymer reaction product; wherein all weight percents are based on the total weight of the composition; and wherein the composition comprises a continuous phase comprising the polyamide, and a disperse phase comprising the poly(phenylene ether)-polysiloxane block copolymer reaction product; wherein the disperse phase comprises particles having a mean cross-sectional area less than or equal to 0.9 micrometer², based on the number of disperse phase particles, as measured by scanning electron microscopy. All of the variations described above in the context of the fiber apply as well to the composition. In some embodiments, said melt blending comprises melt blending the poly(phenylene ether)-polysiloxane block copolymer reaction product, the flame retardant, and the compatibilizing agent with 15 to 70 weight percent of the polyamide, based on the weight of the polyamide, to form an intermediate composition, and melt blending the intermediate composition with the remainder of the polyamide to form the composition. In some embodiments, the polyamide is polyamide-6,6. All of the compositional and procedural variations described above in the context of the fiber apply as well to the composition.

In a very specific embodiment of the composition, the amount of the polyamide is 66 to 82.8 weight percent; the polyamide is polyamide-6,6 having a relative viscosity of 20 to 50 measured at 23°C according to ASTM D789-07 in 90% formic acid; wherein the amount of the poly(phenylene ether)-polysiloxane block copolymer reaction product is 15 to 25 weight percent; the poly(phenylene ether)-polysiloxane block copolymer comprises a poly(phenylene ether) block comprising 2,6-dimethyl-1,4-phenylene ether repeating units, 2,3,6-trimethyl-1,4-phenylene ether repeating units, or a combination thereof; wherein the poly(phenylene ether)-polysiloxane block copolymer comprises a polysiloxane block comprising repeating units having the structure 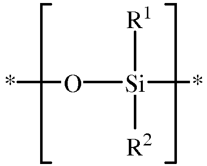 wherein each occurrence of R¹ and R² is independently hydrogen, C₁-C₁₂ hydrocarbyl, or C₁-C₁₂ halohydrocarbyl; and wherein the polysiloxane block further comprises a terminal unit having the structure 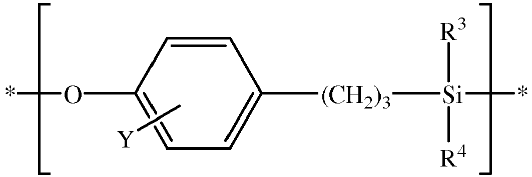 wherein Y is hydrogen, C₁-C₁₂ hydrocarbyl, C₁-C₁₂ hydrocarbyloxy, or halogen, and wherein each occurrence of R³ and R⁴ is independently hydrogen, C₁-C₁₂ hydrocarbyl, or C₁-C₁₂ halohydrocarbyl; the amount of the flame retardant is 2 to 8 weight percent; the flame retardant consists of aluminum tris(diethylphosphinate); the amount of the compatibilizing agent is 0.2 to 1 weight percent; and the compatibilizing agent comprises fumaric acid. In some embodiments, said melt blending comprises melt blending the poly(phenylene ether)-polysiloxane block copolymer reaction product, the flame retardant, and the compatibilizing agent with 20 to 60 weight percent of the polyamide-6,6, based on the weight of the polyamide-6,6, to form an intermediate composition, and melt blending the intermediate composition with the remainder of the polyamide-6,6 to form the composition.

Another embodiment is a method of forming a composition, the method comprising: melt blending 58 to 93.9 weight percent of a polyamide selected from the group consisting of polyamide-6, polyamide-6,6, and combinations thereof; 5 to 35 weight percent of a poly(phenylene ether)-polysiloxane block copolymer reaction product comprising a poly(phenylene ether) and a poly(phenylene ether)-polysiloxane block copolymer; 1 to 10 weight percent of a flame retardant comprising a metal dialkylphosphinate; and 0.1 to 2 weight percent of a compatibilizing agent for the polyamide and the poly(phenylene ether)-polysiloxane block copolymer reaction product; wherein all weight percents are based on the total weight of the composition; and wherein the composition comprises a continuous phase comprising the polyamide, and a disperse phase comprising the poly(phenylene ether)-polysiloxane block copolymer reaction product; wherein the disperse phase comprises particles having a mean cross-sectional area less than or equal to 0.9 micrometer², based on the number of disperse phase particles, as measured by scanning electron microscopy. All of the variations described above in the context of the fiber apply as well to the method of forming the composition. In some embodiments, said melt blending comprises melt blending the poly(phenylene ether)-polysiloxane block copolymer reaction product, the flame retardant, and the compatibilizing agent with 15 to 70 weight percent of the polyamide, based on the weight of the polyamide, to form an intermediate composition, and melt blending the intermediate composition with the remainder of the polyamide to form the composition. In some of these embodiments, said melt blending the poly(phenylene ether)-polysiloxane block copolymer reaction product, the flame retardant, and the compatibilizing agent with 15 to 70 weight percent of the polyamide and said melt blending the intermediate composition with the remainder of the polyamide to form the composition are conducted within a single pass through an extruder. In others of these embodiments, said melt blending the poly(phenylene ether)-polysiloxane block copolymer reaction product, the flame retardant, and the compatibilizing agent with 15 to 70 weight percent of the polyamide is conducted within a first pass through a first extruder, and said melt blending the intermediate composition with the remainder of the polyamide to form the composition is conducted within a second pass through an extruder that is the same as or different from the first extruder. All of the compositional and procedural variations described above in the context of the fiber apply as well to the method of forming the composition.

In a very specific embodiment of the method, the amount of the polyamide is 66 to 82.8 weight percent; the polyamide is a polyamide-6,6 having a relative viscosity of 20 to 50 measured at 23°C according to ASTM D789-07 in 90% formic acid; the amount of the poly(phenylene ether)-polysiloxane block copolymer reaction product is 15 to 25 weight percent; the poly(phenylene ether)-polysiloxane block copolymer comprises a poly(phenylene ether) block comprising 2,6-dimethyl-1,4-phenylene ether repeating units, 2,3,6-trimethyl-1,4-phenylene ether repeating units, or a combination thereof; wherein the poly(phenylene ether)-polysiloxane block copolymer comprises a polysiloxane block comprising repeating units having the structure 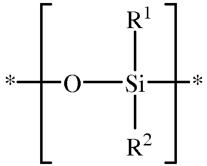 wherein each occurrence of R¹ and R² is independently hydrogen, C₁-C₁₂ hydrocarbyl, or C₁-C₁₂ halohydrocarbyl; and wherein the polysiloxane block further comprises a terminal unit having the structure 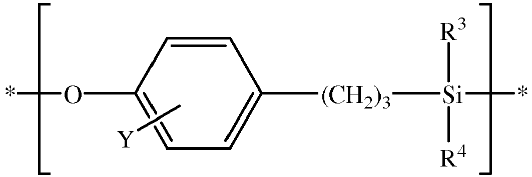 wherein Y is hydrogen, C₁-C₁₂ hydrocarbyl, C₁-C₁₂ hydrocarbyloxy, or halogen, and wherein each occurrence of R³ and R⁴ is independently hydrogen, C₁-C₁₂ hydrocarbyl, or C₁-C₁₂ halohydrocarbyl; the amount of the flame retardant is 2 to 8 weight percent; the flame retardant consists of the metal dialkylphosphinate; the amount of the compatibilizing agent is 0.2 to 1 weight percent; the compatibilizing agent comprises fumaric acid; and said melt blending comprises melt blending the poly(phenylene ether)-polysiloxane block copolymer reaction product, the flame retardant, and the compatibilizing agent with 20 to 60 weight percent of the polyamide-6,6, based on the weight of the polyamide-6,6, to form an intermediate composition, and melt blending the intermediate composition with the remainder of the polyamide-6,6 to form the composition.

The invention includes at least the following embodiments.
Embodiment 1: A fiber comprising a composition comprising the product of melt blending: 58 to 93.9 weight percent of a polyamide selected from the group consisting of polyamide-6, polyamide-6,6, and combinations thereof; 5 to 35 weight percent of a poly(phenylene ether)-polysiloxane block copolymer reaction product comprising a poly(phenylene ether) and a poly(phenylene ether)-polysiloxane block copolymer; 1 to 10 weight percent of a flame retardant comprising a metal dialkylphosphinate; and 0.1 to 2 weight percent of a compatibilizing agent for the polyamide and the poly(phenylene ether)-polysiloxane block copolymer reaction product; wherein all weight percents are based on the total weight of the composition; and wherein the composition comprises a continuous phase comprising the polyamide, and a disperse phase comprising the poly(phenylene ether)-polysiloxane block copolymer reaction product; wherein the disperse phase particles have a mean cross-sectional area less than or equal to 0.9 micrometer², based on the number of disperse phase particles, as measured by scanning electron microscopy.
Embodiment 2: The fiber of embodiment 1, wherein said melt blending comprises melt blending the poly(phenylene ether)-polysiloxane block copolymer reaction product, the flame retardant, and the compatibilizing agent with 15 to 70 weight percent of the polyamide, based on the weight of the polyamide, to form an intermediate composition; and melt blending the intermediate composition with the remainder of the polyamide to form the composition.
Embodiment 3: The fiber of embodiment 1 or 2, wherein the polyamide is polyamide-6,6.
Embodiment 4: The fiber of any of embodiments 1-3, wherein the polyamide has a relative viscosity of 20 to 50 measured at 23°C according to ASTM D789-07 in 90% formic acid.
Embodiment 5: The fiber of any of embodiments 1-4, wherein the polyamide has an amine end group concentration of less than or equal to 100 microequivalents per gram.
Embodiment 6: The fiber of any of embodiments 1-5, wherein the poly(phenylene ether)-polysiloxane block copolymer comprises a poly(phenylene ether) block and a polysiloxane block, and wherein the composition comprises 0.5 to 2 weight percent of the polysiloxane block.
Embodiment 7: The fiber of any of embodiments 1-6, wherein the poly(phenylene ether)-polysiloxane block copolymer comprises a poly(phenylene ether) block comprising 2,6-dimethyl-1,4-phenylene ether repeating units, 2,3,6-trimethyl-1,4-phenylene ether repeating units, or a combination thereof; wherein the poly(phenylene ether)-polysiloxane block copolymer comprises a polysiloxane block comprising repeating units having the structure 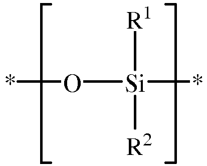 wherein each occurrence of R¹ and R² is independently hydrogen, C₁-C₁₂ hydrocarbyl, or C₁-C₁₂ halohydrocarbyl; and the polysiloxane block further comprises a terminal unit having the structure 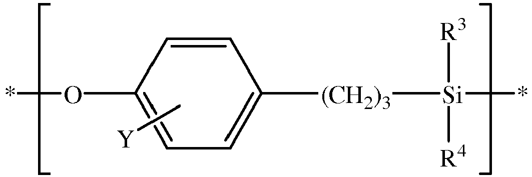 wherein Y is hydrogen, C₁-C₁₂ hydrocarbyl, C₁-C₁₂ hydrocarbyloxy, or halogen, and wherein each occurrence of R³ and R⁴ is independently hydrogen, C₁-C₁₂ hydrocarbyl, or C₁-C₁₂ halohydrocarbyl.
Embodiment 8: The fiber of any of embodiment 1-7, wherein the amount of poly(phenylene ether)-polysiloxane block copolymer reaction product is 5 to 20 weight percent.
Embodiment 9: The fiber of any of embodiment 1-8, wherein the flame retardant consists of the metal dialkylphosphinate.
Embodiment 10: The fiber of any of embodiments 1-9, wherein the flame retardant consists of aluminum tris(diethylphosphinate).
Embodiment 11: The fiber of any of embodiments 1-10, wherein the compatibilizing agent comprises fumaric acid.
Embodiment 12: The fiber of embodiment 1, wherein the amount of polyamide is 66 to 82.8 weight percent; wherein the polyamide is a polyamide-6,6 having a relative viscosity of 20 to 50 measured at 23°C according to ASTM D789-07 in 90% formic acid; wherein the amount of the poly(phenylene ether)-polysiloxane block copolymer reaction product is 15 to 25 weight percent; wherein the poly(phenylene ether)-polysiloxane block copolymer comprises a poly(phenylene ether) block comprising 2,6-dimethyl-1,4-phenylene ether repeating units, 2,3,6-trimethyl-1,4-phenylene ether repeating units, or a combination thereof; wherein the poly(phenylene ether)-polysiloxane block copolymer further comprises a polysiloxane block comprising repeating units having the structure 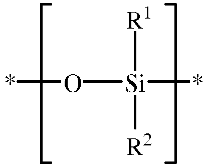 wherein each occurrence of R¹ and R² is independently hydrogen, C₁-C₁₂ hydrocarbyl, or C₁-C₁₂ halohydrocarbyl; wherein the polysiloxane block further comprises a terminal unit having the structure 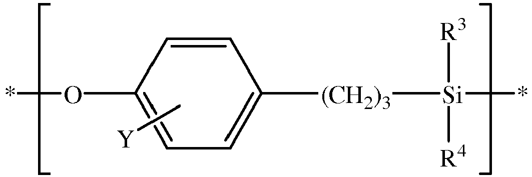 wherein Y is hydrogen, C₁-C₁₂ hydrocarbyl, C₁-C₁₂ hydrocarbyloxy, or halogen, and wherein each occurrence of R³ and R⁴ is independently hydrogen, C₁-C₁₂ hydrocarbyl, or C₁-C₁₂ halohydrocarbyl; wherein the amount of flame retardant is 2 to 8 weight percent; wherein the flame retardant consists of aluminum tris(diethylphosphinate); wherein the amount of compatibilizing agent is 0.2 to 1 weight percent; wherein the compatibilizing agent comprises fumaric acid; wherein the composition comprises a continuous phase comprising the polyamide-6,6, and a disperse phase comprising the poly(phenylene ether)-polysiloxane block copolymer reaction product; and wherein the disperse phase particles have a mean cross-sectional area less than or equal to 0.7 micrometer², based on the number of disperse phase particles, as measured by scanning electron microscopy.
Embodiment 12a: A fiber comprising a composition comprising the product of melt blending: 66 to 82.8 weight percent of a polyamide-6,6 having a relative viscosity of 20 to 50 measured at 23°C according to ASTM D789-07 in 90% formic acid; 15 to 25 weight percent of a poly(phenylene ether)-polysiloxane block copolymer reaction product comprising a poly(phenylene ether) and a poly(phenylene ether)-polysiloxane block copolymer; wherein the poly(phenylene ether)-polysiloxane block copolymer comprises a poly(phenylene ether) block comprising 2,6-dimethyl-1,4-phenylene ether repeating units, 2,3,6-trimethyl-1,4-phenylene ether repeating units, or a combination thereof; wherein the poly(phenylene ether)-polysiloxane block copolymer comprises a polysiloxane block comprising repeating units having the structure 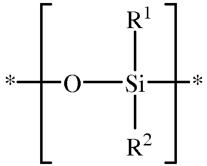 wherein each occurrence of R¹ and R² is independently hydrogen, C₁-C₁₂ hydrocarbyl, or C₁-C₁₂ halohydrocarbyl; and wherein the polysiloxane block further comprises a terminal unit having the structure 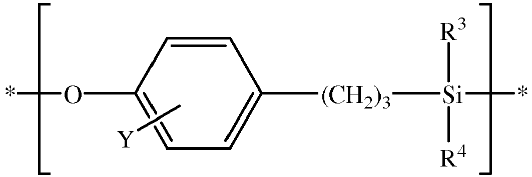 wherein Y is hydrogen, C₁-C₁₂ hydrocarbyl, C₁-C₁₂ hydrocarbyloxy, or halogen, and wherein each occurrence of R³ and R⁴ is independently hydrogen, C₁-C₁₂ hydrocarbyl, or C₁-C₁₂ halohydrocarbyl; 2 to 8 weight percent of a flame retardant consisting of aluminum tris(diethylphosphinate); and 0.2 to 1 weight percent of a compatibilizing agent comprising fumaric acid; wherein all weight percents are based on the total weight of the composition; and wherein the composition comprises a continuous phase comprising the polyamide-6,6, and a disperse phase comprising the poly(phenylene ether)-polysiloxane block copolymer reaction product; wherein the disperse phase particles have a mean cross-sectional area less than or equal to 0.7 micrometer², based on the number of disperse phase particles, as measured by scanning electron microscopy.
Embodiment 13: The fiber of embodiment 12, wherein said melt blending comprises melt blending the poly(phenylene ether)-polysiloxane block copolymer reaction product, the flame retardant, and the compatibilizing agent with 20 to 60 weight percent of the polyamide-6,6, based on the weight of the polyamide-6,6, to form an intermediate composition; and melt blending the intermediate composition with the remainder of the polyamide-6,6 to form the composition.
Embodiment 14: A yarn comprising the fiber of any of embodiments 1-13.
Embodiment 15: A fabric comprising the fiber of any of embodiments 1-13.
Embodiment 16: An article comprising the fiber of any of embodiments 1-13.
Embodiment 17: The article of embodiment 16, wherein the article is a carpet.
Embodiment 18: The article of embodiment 16, wherein the article is an article of clothing.
Embodiment 19: A composition comprising the product of melt blending: 58 to 93.9 weight percent of a polyamide selected from the group consisting of polyamide-6, polyamide-6,6, and combinations thereof; 5 to 35 weight percent of a poly(phenylene ether)-polysiloxane block copolymer reaction product comprising a poly(phenylene ether) and a poly(phenylene ether)-polysiloxane block copolymer; 1 to 10 weight percent of a flame retardant comprising a metal dialkylphosphinate; and 0.1 to 2 weight percent of a compatibilizing agent for the polyamide and the poly(phenylene ether)-polysiloxane block copolymer reaction product; wherein all weight percents are based on the total weight of the composition; and wherein the composition comprises a continuous phase comprising the polyamide, and a disperse phase comprising the poly(phenylene ether)-polysiloxane block copolymer reaction product; wherein the disperse phase particles have a mean cross-sectional area less than or equal to 0.9 micrometer², based on the number of disperse phase particles, as measured by scanning electron microscopy.
Embodiment 20: The composition of embodiment 19, wherein said melt blending comprises melt blending the poly(phenylene ether)-polysiloxane block copolymer reaction product, the flame retardant, and the compatibilizing agent with 20 to 60 weight percent of the polyamide, based on the weight of the polyamide, to form an intermediate composition; and melt blending the intermediate composition with the remainder of the polyamide to form the composition.
Embodiment 21: The composition of embodiment 19 or 20, wherein the polyamide is polyamide-6,6.
Embodiment 22: The composition of embodiment 19, wherein the amount of the polyamide is 66 to 82.8 weight percent; wherein the polyamide is polyamide-6,6 having a relative viscosity of 20 to 50 measured at 23°C according to ASTM D789-07 in 90% formic acid; wherein the amount of the poly(phenylene ether)-polysiloxane block copolymer reaction product is 15 to 25 weight percent; wherein the poly(phenylene ether)-polysiloxane block copolymer comprises a poly(phenylene ether) block comprising 2,6-dimethyl-1,4-phenylene ether repeating units, 2,3,6-trimethyl-1,4-phenylene ether repeating units, or a combination thereof; wherein the poly(phenylene ether)-polysiloxane block copolymer comprises a polysiloxane block comprising repeating units having the structure 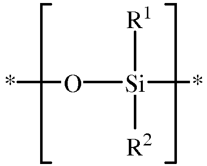 wherein each occurrence of R¹ and R² is independently hydrogen, C₁-C₁₂ hydrocarbyl, or C₁-C₁₂ halohydrocarbyl; and wherein the polysiloxane block further comprises a terminal unit having the structure 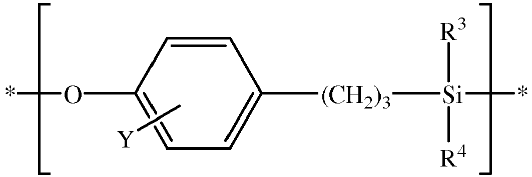 wherein Y is hydrogen, C₁-C₁₂ hydrocarbyl, C₁-C₁₂ hydrocarbyloxy, or halogen, and wherein each occurrence of R³ and R⁴ is independently hydrogen, C₁-C₁₂ hydrocarbyl, or C₁-C₁₂ halohydrocarbyl; wherein the amount of the flame retardant is 2 to 8 weight percent; wherein the flame retardant consists of aluminum tris(diethylphosphinate); wherein the amount of the compatibilizing agent is 0.2 to 1 weight percent; and wherein the compatibilizing agent comprises fumaric acid.
Embodiment 23: The composition of embodiment 22, wherein said melt blending comprises melt blending the poly(phenylene ether)-polysiloxane block copolymer reaction product, the flame retardant, and the compatibilizing agent with 20 to 60 weight percent of the polyamide-6,6, based on the weight of the polyamide-6,6, to form an intermediate composition; and melt blending the intermediate composition with the remainder of the polyamide-6,6 to form the composition.
Embodiment 24: A method of forming a composition, the method comprising: melt blending 58 to 93.9 weight percent of a polyamide selected from the group consisting of polyamide-6, polyamide-6,6, and combinations thereof; 5 to 35 weight percent of a poly(phenylene ether)-polysiloxane block copolymer reaction product comprising a poly(phenylene ether) and a poly(phenylene ether)-polysiloxane block copolymer; 1 to 10 weight percent of a flame retardant comprising a metal dialkylphosphinate; and 0.1 to 2 weight percent of a compatibilizing agent for the polyamide and the poly(phenylene ether)-polysiloxane block copolymer reaction product; wherein all weight percents are based on the total weight of the composition; and wherein the composition comprises a continuous phase comprising the polyamide, and a disperse phase comprising the poly(phenylene ether)-polysiloxane block copolymer reaction product; wherein the disperse phase comprises particles having a mean cross-sectional area less than or equal to 0.9 micrometer², as measured by scanning electron microscopy.
Embodiment 25: The method of embodiment 24, wherein said melt blending comprises melt blending the poly(phenylene ether)-polysiloxane block copolymer reaction product, the flame retardant, and the compatibilizing agent with 20 to 60 weight percent of the polyamide, based on the weight of the polyamide, to form an intermediate composition; and melt blending the intermediate composition with the remainder of the polyamide to form the composition.
Embodiment 26: The method of embodiment 25, wherein said melt blending the poly(phenylene ether)-polysiloxane block copolymer reaction product, the flame retardant, and the compatibilizing agent with 15 to 70 weight percent of the polyamide and said melt blending the intermediate composition with the remainder of the polyamide to form the composition are conducted within a single pass through an extruder.
Embodiment 27: The method of embodiment 25, wherein said melt blending the poly(phenylene ether)-polysiloxane block copolymer reaction product, the flame retardant, and the compatibilizing agent with 15 to 70 weight percent of the polyamide is conducted within a first pass through a first extruder, and said melt blending the intermediate composition with the remainder of the polyamide to form the composition is conducted within a second pass through a second extruder that is the same as or different from the first extruder.
Embodiment 28: The method of embodiment 24, wherein the amount of the polyamide is 66 to 82.8 weight percent; wherein the polyamide is a polyamide-6,6 having a relative viscosity of 20 to 50 measured at 23°C according to ASTM D789-07 in 90% formic acid; wherein the amount of the poly(phenylene ether)-polysiloxane block copolymer reaction product is 15 to 25 weight percent; wherein the poly(phenylene ether)-polysiloxane block copolymer comprises a poly(phenylene ether) block comprising 2,6-dimethyl-1,4-phenylene ether repeating units, 2,3,6-trimethyl-1,4-phenylene ether repeating units, or a combination thereof; wherein the poly(phenylene ether)-polysiloxane block copolymer comprises a polysiloxane block comprising repeating units having the structure 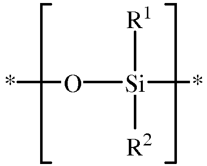 wherein each occurrence of R¹ and R² is independently hydrogen, C₁-C₁₂ hydrocarbyl, or C₁-C₁₂ halohydrocarbyl; and wherein the polysiloxane block further comprises a terminal unit having the structure 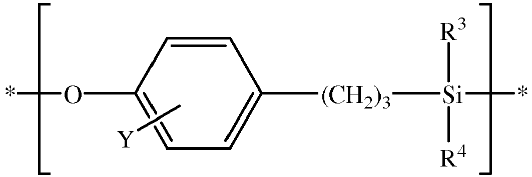 wherein Y is hydrogen, C₁-C₁₂ hydrocarbyl, C₁-C₁₂ hydrocarbyloxy, or halogen, and wherein each occurrence of R³ and R⁴ is independently hydrogen, C₁-C₁₂ hydrocarbyl, or C₁-C₁₂ halohydrocarbyl; wherein the amount of the flame retardant is 2 to 8 weight percent; wherein the flame retardant consists of the metal dialkylphosphinate; wherein the amount of the compatibilizing agent is 0.2 to 1 weight percent; and wherein the compatibilizing agent comprises fumaric acid.
Embodiment 29: The method of embodiment 28, wherein said melt blending comprises melt blending the poly(phenylene ether)-polysiloxane block copolymer reaction product, the flame retardant, and the compatibilizing agent with 20 to 60 weight percent of the polyamide-6,6, based on the weight of the polyamide-6,6, to form an intermediate composition; and melt blending the intermediate composition with the remainder of the polyamide-6,6 to form the composition.
Embodiment 30: A composition formed by the method of any of claims 24-29.

All ranges disclosed herein are inclusive of the endpoints, and the endpoints are independently combinable with each other. Each range disclosed herein constitutes a disclosure of any point or sub-range lying within the disclosed range.

The use of the terms "a" and "an" and "the" and similar referents in the context of describing the invention (especially in the context of the following claims) are to be construed to cover both the singular and the plural, unless otherwise indicated herein or clearly contradicted by context. Further, it should further be noted that the terms "first," "second," and the like herein do not denote any order, quantity, or importance, but rather are used to distinguish one element from another. The modifier "about" used in connection with a quantity is inclusive of the stated value and has the meaning dictated by the context (e.g., it includes the degree of error associated with measurement of the particular quantity).

The invention is further illustrated by the following non-limiting examples.

### PREPARATIVE EXAMPLE 1

The poly(phenylene ether)-polysiloxane block copolymer reaction product used in the Examples was prepared as described for Example 16 in U.S. Patent No. 8,017,697 to Carrillo et al.

Reaction conditions are summarized in Table 1, where "DMBA level (%)" is the concentration of dimethyl-n-butylamine, expressed as a weight percent relative to the weight of toluene; "Solids (%)" is the weight of total 2,6-dimethylphenol and eugenol-capped polysiloxane, expressed as a weight percent relative to the sum of the weights of 2,6-dimethylphenol, eugenol-capped polysiloxane, and toluene; "Polysiloxane chain length" is the average number of dimethylsiloxane (-Si(CH₃)₂O-) units in the eugenol-capped polysiloxane; "Polysiloxane loading (%)" is the weight percent of eugenol-capped polysiloxane in the reaction mixture, based on the total weight of the eugenol-capped polysiloxane and the 2,6-dimethylphenol; "Initial 2,6-dimethylphenol (%)" is the weight percent of 2,6-dimethylphenol present in the reaction vessel at the initiation of polymerization (the introduction of oxygen to the reaction vessel), relative to the total weight of 2,6-dimethylphenol,; "O:2,6-dimethylphenol mole ratio" is the mole ratio of atomic oxygen (provided as molecular oxygen) to 2,6-dimethylphenol maintained during the addition of 2,6-dimethylphenol; "Temp., initial charge (°C)" is the temperature, in degrees centigrade, of the reaction mixture when the initial charge of monomer was added to the reaction vessel, and when oxygen was first introduced to the reaction mixture; "Temp., addition (°C)" is the reaction temperature during further addition of 2,6-dimethylphenol; "Temp., build (°C)" is the temperature, expressed in degrees centigrade, during the build phase of the reaction; "Ramp time (min)" is the time, expressed in minutes, during which the temperature was ramped from the addition temperature to the build temperature; "Ramp slope (°C/min)" is the rate of change of temperature, expressed in degrees centigrade per minute, during the period in which the temperature was ramped from the addition temperature to the build temperature; "Reaction time (min)" is the total reaction time, expressed in minutes, elapsed between the moment of oxygen introduction and the moment of oxygen cut-off. Other than the monomer initially present in the reactor, monomer was added from 40 to 80 minutes relative to the start of reaction (that is, from the initiation of oxygen flow) at 0 minutes. Build time is measured from the end of controlled monomer addition to the end of reaction (that is, to the termination of oxygen flow). Build time was varied between 80 and 160 minutes.

The reactor and the 2,6-dimethylphenol addition tank were rinsed with warm toluene to assure their cleanliness. The reaction was purged with nitrogen to achieve an oxygen concentration of less than 1%. The reactor was charged with toluene, and this toluene was stirred at 500 rotations per minute (rpm). The temperature of the initial toluene was adjusted to the "initial charge" temperature of 21 °C and maintained at that temperature during addition of the initial charge of 2,6-dimethylphenol from the addition tank to the reaction vessel. After the addition of the initial charge of 2,6-dimethylphenol was complete, the reaction vessel was charged with the eugenol-capped polydimethylsiloxane, the di-n-butylamine, the dimethyl-n-butylamine, the diamine, and the copper catalyst. Oxygen flow and further monomer addition were initiated, and the oxygen flow was regulated to maintain a head space concentration less than 17 percent. During further monomer addition, cooling water supply temperature was adjusted to maintain the temperature specified as "Temp, addition (°C)" in Table 1. After monomer addition was complete, the monomer addition line was flushed with toluene and the reaction temperature was increased to the temperature specified as "Temp, build (°C)" in Table 1. This temperature adjustment was conducted over the time period specified as "Ramp time (min)", and at the rate specified as "Ramp slope (°C/min)" in Table 1. The reaction was continued until a pre-determined time point was reached. The pre-determined end point is the time at which target intrinsic viscosity and maximum polysiloxane incorporation are attained and is typically 80 to 160 minutes after 2,6-dimethylphenyl addition ends. Once this time point reached, the oxygen flow was stopped. The reaction mixture was then heated to 60 °C and pumped to a chelation tank containing aqueous chelant solution. The resulting mixture was stirred and held at 60 °C for one hour. The light (organic) and heavy (aqueous) phases were separated by decantation, and the heavy phase was discarded. A small portion of the light phase was sampled and precipitated with isopropanol for analysis, and the remainder of the light phase was pumped to a precipitation tank and combined with methanol antisolvent in a weight ratio of 3 parts antisolvent to 1 part light phase. The precipitate was filtered to form a wet cake, which was reslurried three times with the same antisolvent and dried under nitrogen until a toluene concentration less than 1 weight percent was obtained.

For the product properties in Table 1, "Mol. Wt. <10K (%)" is the weight percent of the isolated product having a molecular weight less than 10,000 atomic mass units, as determined by gel permeation chromatography; "Mol. Wt. >100K (%)" is the weight percent of the isolated product having a molecular weight greater than 10,000 atomic mass units, as determined by gel permeation chromatography; "IV, end of rxn. (dL/g)" is the intrinsic viscosity, expressed in deciliters per gram and measured by Ubbelohde viscometer at 25°C in chloroform, of dried powder isolated by precipitation from isopropanol; "IV, end of cheln. (dL/g)" expressed in deciliters per gram and measured by Ubbelohde viscometer at 25°C in chloroform, of the product present in the post-chelation organic phase which has been isolated by precipitation from isopropanol then dried; "M_{w}, end of rxn. (AMU)" is the weight average molecular weight, expressed in atomic mass units and measured by gel permeation chromatography, of the product present in the reaction mixture at the end of the polymerization reaction which has been isolated by precipitation from isopropanol then dried; "Mₙ, end of rxn. (AMU)" is the number average molecular weight, expressed in atomic mass units and measured by gel permeation chromatography, of the product present in the reaction mixture at the end of the polymerization reaction which has been isolated by precipitation from isopropanol then dried; "M_{w}/Mₙ, end of rxn." is the ratio of weight average molecular weight to number average molecular weight for the product present in the reaction mixture at the end of the polymerization reaction which has been isolated by precipitation from isopropanol then dried; "M_{w}, end of cheln. (AMU)" is the weight average molecular weight, expressed in atomic mass units and measured by gel permeation chromatography, of the product present in the post-chelation organic phase which has been isolated by precipitation from isopropanol then dried; "Mₙ, end of cheln. (AMU)" is the number average molecular weight, expressed in atomic mass units and measured by gel permeation chromatography, of the product present in the post-chelation organic phase which has been isolated by precipitation from isopropanol then dried; "M_{w}/Mₙ, end of cheln." is the ratio of weight average molecular weight to number average molecular weight for the product present in the post-chelation organic phase which has been isolated by precipitation from isopropanol then dried; "Weight % siloxane (%)" is the weight percent of dimethylsiloxane units in the isolated product, based on the total weight of 2,6-dimethyl-1,4-phenylene ether units and dimethylsiloxane units in the isolated product., as determined by ¹H NMR; "Siloxane Incorporation Efficiency (%)" is the weight percent of dimethylsiloxane units in the isolated product compared to the weight percent of dimethylsiloxane units in the total monomer composition, as determined by ¹H NMR; "Weight % Biphenyl (%)" is the weight percent of 3,3',5,5'-tetramethyl-4,4'-biphenol residues in the isolated product, as determined by ¹H NMR. Details of ¹H NMR methods can be found in U.S. Patent No. 8,017,697.

**Table 1**

| | P. Ex. 1 |
|---|---|
| REACTION CONDITIONS | |
| DMBA level (%) | 1.2 |
| Solids (%) | 23 |
| Polysiloxane chain length | 45 |
| Polysiloxane loading (%) | 5 |
| Initial 2,6-DMP (%) | 7.9 |
| O:2,6-dimethylphenol mole ratio | 0.98 |
| Catalyst (%) | 0.75 |
| Temp., initial charge (°C) | 21 |
| Temp., addition (°C) | 38 |
| Temp., build (°C) | 49 |
| Ramp time (min) | 30 |
| Ramp slope (°C/min) | 0.37 |
| Reaction time (min) | 200 |

| FINAL PRODUCT PROPERTIES | |
|---|---|
| Mol. Wt. <10K (%) | 11 |
| Mol. Wt. >100K (%) | 16 |
| IV, end of rxn. (dL/g) | 0.45 |
| IV, end of cheln. (dL/g) | 0.39 |
| M_{w}, end of rxn. (AMU) | 64000 |
| Mₙ, end of rxn. (AMU) | 23000 |
| M_{w}/Mₙ, end of rxn. | 2.8 |
| M_{w}, end of cheln. (AMU) | 56000 |
| Mₙ, end of cheln. (AMU) | 20000 |
| M_{w}/Mₙ, end of cheln. | 2.7 |
| Weight % siloxane (%) | 4.78 |
| Silox. Incorp. Effic. (%) | 96 |
| Weight % Biphenyl (%) | 1.26 |

### EXAMPLES 1-4, COMPARATIVE EXAMPLES 1-10

These examples illustrate the use of poly(phenylene ether)-polysiloxane block copolymer reaction product to preserve flame retardancy while reducing flame retardant loading in polyamide-6,6, as well as the unexpected ability of the poly(phenylene ether)-polysiloxane block copolymer reaction product to promote dispersion of the flame retardant in the polyamide-6,6.

Compositions were prepared using the components summarized in Table 2.

**Table 2**

| Component | Description |
|---|---|
| PA66 | Polyamide-6,6 having a relative viscosity of about 34-38 measured in 90% formic acid according to ASTM D789, and an amine end group concentration of about 49-53 microequivalents per gram; obtained as VYDYNE 21ZLV from Ascend. |
| PPE-Si 0.40 | Poly(phenylene ether)-polysiloxane block copolymer reaction product, prepared as described in Preparative Example 1 and having an intrinsic viscosity of about 0.4 deciliter/gram as measured in chloroform at 25°C. |
| FA | Fumaric acid, CAS Reg. No. 110-17-8; obtained from Ashland Chemical. |
| OP 1230 | Aluminum tris(diethylphosphinate), CAS Reg. No. 225789-38-8, obtained in powder form as EXOLIT OP 1230 from Clariant. |

Compositions are summarized in Table 3, where component amounts are in parts by weight. Components were melt-blended in a Werner & Pfleiderer 30 millimeter internal diameter twin-screw extruder operated at 300 rotations per minute and a material throughput of about 23 kilograms/hour (50 pounds/hour). To prepare the compositions of Comparative Examples 1-6, a dry blend of poly(phenylene ether)-polysiloxane block copolymer reaction product, flame retardant, and fumaric acid was fed into the upstream feed port of the extruder, and the polyamide was fed into the downstream port. The extruder temperature was maintained at 204°C (400°F) in zone 1 (the most upstream zone), at 299°C (570°F) in zones 2-10, and at 304°C (580°F) at the die. The extrudate was cooled and pelletized. To prepare the compositions of Comparative Examples 7-10, polyamide-6,6 and flame retardant, if any, were added to the feed throat of the extruder. To prepare the compositions of Examples 1-4, a two-step compounding process was used. First, the components other than polyamide-6,6 were compounded with sufficient polyamide-6,6 to form an intermediate composition in which components other than polyamide-6,6 were at twice their concentration in the final composition. Second, the intermediate composition was compounded with an equal weight of polyamide-6,6 to yield the final composition having the component amounts shown in Table 3.

Table 3 also summarizes flame retardancy test results for injection molded test samples. Flame retardancy of injection molded flame bars was determined according to Underwriter's Laboratory Bulletin 94 "Tests for Flammability of Plastic Materials, UL 94", 20 mm Vertical Burning Flame Test. Before testing, flame bars with a thickness of 1.5 millimeters were conditioned at 23°C and 50% relative humidity for at least 48 hours. In the UL 94 20 mm Vertical Burning Flame Test, a set of five flame bars is tested. For each bar, a flame is applied to the bar then removed, and the time required for the bar to self-extinguish (first afterflame time, t1) is noted. The flame is then reapplied and removed, and the time required for the bar to self-extinguish (second afterflame time, t2) and the post-flame glowing time (afterglow time, t3) are noted. To achieve a rating of V-0, the afterflame times t1 and t2 for each individual specimen must be less than or equal to 10 seconds; and the total afterflame time for all five specimens (t1 plus t2 for all five specimens) must be less than or equal to 50 seconds; and the second afterflame time plus the afterglow time for each individual specimen (t2 + t3) must be less than or equal to 30 seconds; and no specimen can flame or glow up to the holding clamp; and the cotton indicator cannot be ignited by flaming particles or drops. To achieve a rating of V-1, the afterflame times t1 and t2 for each individual specimen must be less than or equal to 30 seconds; and the total afterflame time for all five specimens (t1 plus t2 for all five specimens) must be less than or equal to 250 seconds; and the second afterflame time plus the afterglow time for each individual specimen (t2 + t3) must be less than or equal to 60 seconds; and no specimen can flame or glow up to the holding clamp; and the cotton indicator cannot be ignited by flaming particles or drops. To achieve a rating of V-2, the afterflame times t1 and t2 for each individual specimen must be less than or equal to 30 seconds; and the total afterflame time for all five specimens (t1 plus t2 for all five specimens) must be less than or equal to 250 seconds; and the second afterflame time plus the afterglow time for each individual specimen (t2 + t3) must be less than or equal to 60 seconds; and no specimen can flame or glow up to the holding clamp; but the cotton indicator can be ignited by flaming particles or drops. Compositions not satisfying the V-2 requirements are considered to have failed.

Disperse phase particle mean cross-sectional area, expressed in units of micrometer², was determined as follows. Scanning electron micrographs were obtained at 1000 X magnification using a Zeiss EVO40XVP scanning electron microscope under scanning electron (SE) mode with brightness and contrast automatically adjusted under high vacuum conditions. Prior to microscopy, samples were etched in toluene for 15 seconds at about 23°C to dissolve the poly(phenylene ether) and poly(phenylene ether)-polysiloxane block copolymer components of the disperse phase particles. Scanning electron micrographs so obtained were analyzed using Clemex Vision PE version 6.0.035 software, focusing on particles that were completely within the image (i.e., omitting from the analysis those particles touching the edge of the image frame). Partially overlapping particles were analyzed as separate particles. The image analysis yielded a distribution of particle sizes, which was statistically analyzed with Minitab software, version 16, to determine the mean and standard deviation of the disperse phase particle cross-sectional area for each composition. In Table 3, the mean and standard deviation of the cross-sectional area are listed in the row labeled "Mean particle size ± standard deviation (µm²)".

The Table 3 test results show that Example 1 with 3 parts by weight (2.90 weight percent) flame retardant exhibited a UL 94 V-1 rating, while Example 2 with 4.5 parts by weight (4.29 weight percent) flame retardant, Example 3 with 6.0 parts by weight (5.64 weight percent) flame retardant, and Example 4 with5.0 parts by weight (4.74 weight percent) flame retardant exhibited UL 94 V-0 ratings. Much higher flame retardant amounts were required to achieve comparable ratings for polyamide-6,6 compositions without poly(phenylene ether)-polysiloxane block copolymer reaction product. Specifically, note that Comparative Example 8 with 9 parts by weight (8.26 weight percent) flame retardant exhibited a V-2 rating, and Comparative Example 9 with 12 parts by weight (10.71 weight percent) flame retardant exhibited a V-0 rating. Note also that Examples 1-4 each exhibited disperse phase particle mean cross-sectional areas of about 0.3 micrometer² or less, whereas Comparative Examples 1, 3-6, and 8-10 exhibiting disperse phase particle mean cross-sectional areas of about 1 micrometer² or greater, and Comparative Example 2 exhibiting a disperse phase particle mean cross-sectional area of about 0.5 micrometer².

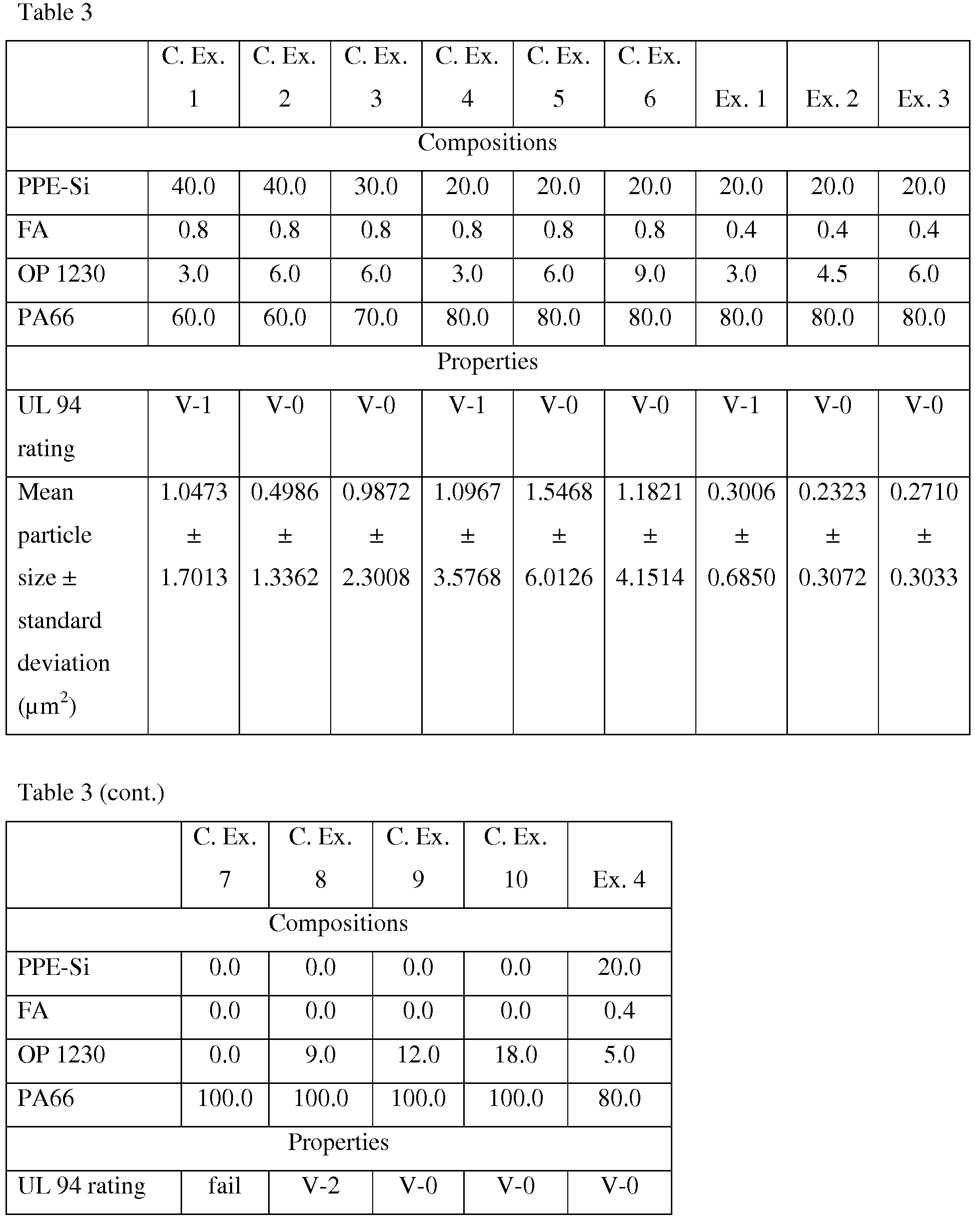

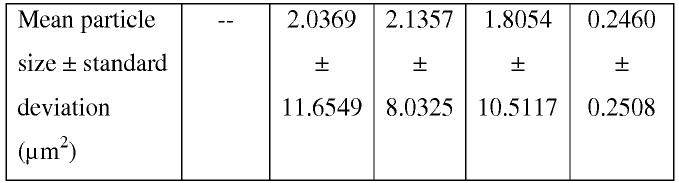

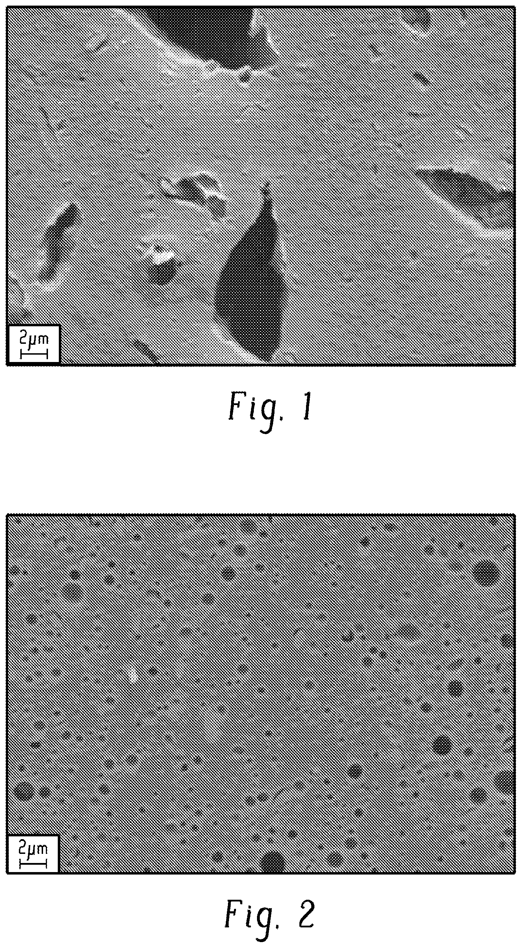

The ability of the poly(phenylene ether)-polysiloxane block copolymer reaction product to facilitate dispersion of the flame retardant in polyamide-6,6 is further illustrated by Figures 1 and 2. These figures are scanning electron micrographs of surfaces of the Comparative Example 9 and Example 2 compositions, respectively, that had been etched with toluene for 15 seconds. Figure 1 shows that compounding polyamide-6,6 with flame retardant results in disperse phase particles with a mean cross-section area larger than 2 micrometer². In contrast, Figure 2 shows that pre-compounding poly(phenylene ether)-polysiloxane block copolymer reaction product, compatibilizing agent, and flame retardant with a portion of polyamide-6,6 to form an intermediate composition, following by compounding the intermediate composition with the remainder of polyamide-6,6 yields a composition in which the poly(phenylene ether)-polysiloxane block copolymer reaction product and the flame retardant are well dispersed as particles having a mean cross-sectional area of about 0.23 micrometer².

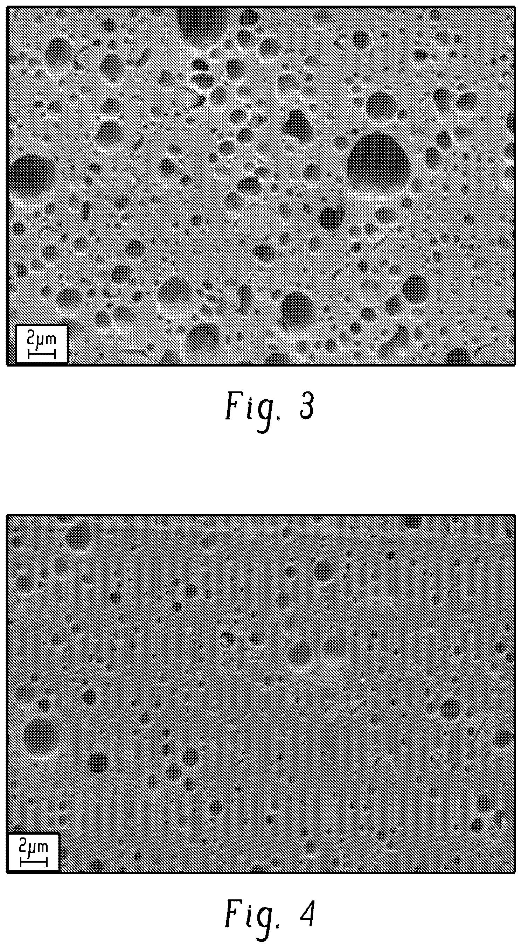

Figures 3 and 4 illustrate the effect of the compounding/dilution step on particle size. Figure 3 corresponds to Comparative Example 2. Figure 4 corresponds to Example 1, which was prepared by compounding the Comparative Example 2 composition with an equal weight of polyamide-6,6. It is evident that the disperse phase particle size in Figure 4 (Example 1; mean cross-sectional area of about 0.3 micrometer²) is substantially smaller than the disperse phase particle size in Figure 3 (Comparative Example 2; mean cross-sectional area of about 0.5 micrometer²).

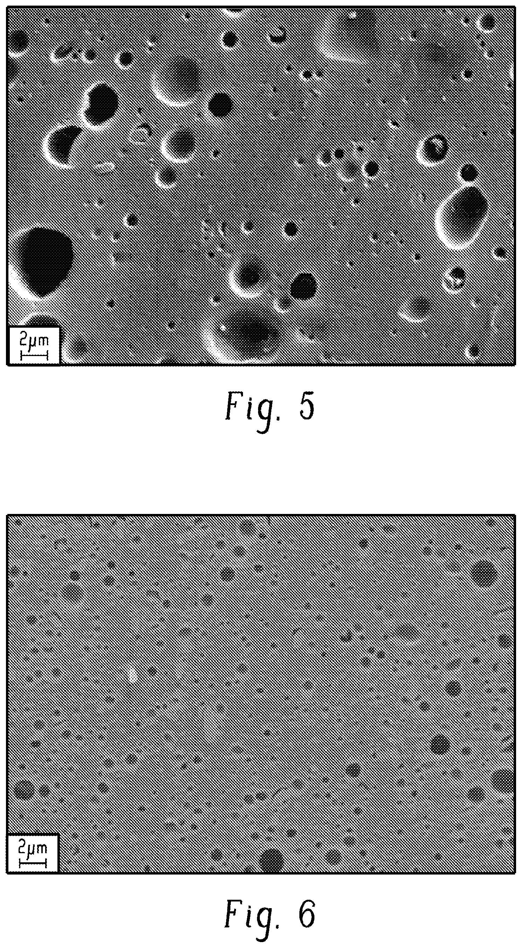

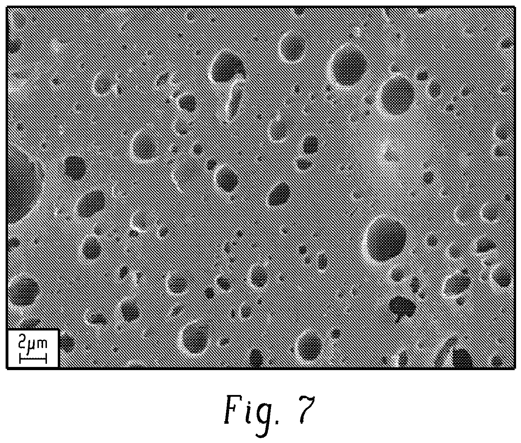

Figures 5-7 illustrate the advantage of the present compounding method relative to alternative compounding methods. The three samples in Figures 5-7 have the same overall composition, corresponding to Example 2. For Figure 5, the sample was prepared in a single compounding step. For Figure 6, the sample was prepared by first forming an intermediate composition comprising all the non-polyamide components and a fraction of the polyamide; the intermediate composition was then compounded with an equal weight of polyamide to form the final composition. And for Figure 7, the sample was prepared by twice compounding the same composition. The results show that the inventive method of forming an intermediate composition, then diluting that composition with additional polyamide in a second compounding step yields by far the smallest disperse phase particle size.

### EXAMPLES 4-7, COMPARATIVE EXAMPLE 11

These examples illustrate use of the composition to form fibers.

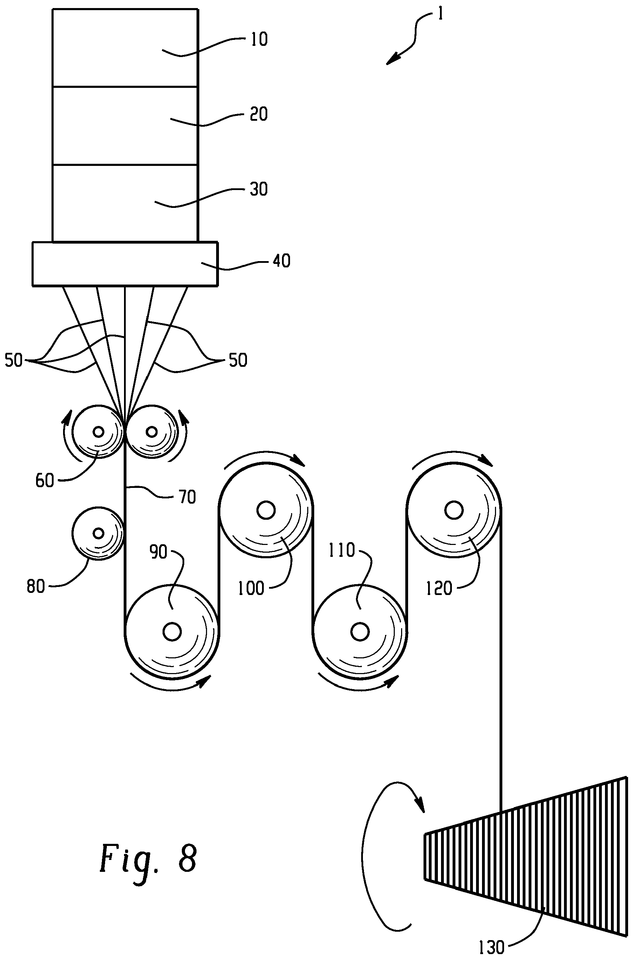

Fibers were produced on a Hills, Inc. (West Melbourne, Florida, USA), Model GHP pilot fiber line, with a 1.25 inch diameter extrusion screw, a 2:1 compression ratio, and a spinneret having 144 die holes of 0.60 millimeter diameter. The screen pack had five layers, with 200 mesh (75 micrometer opening) as the finest screen. Figure 8 is a schematic diagram of a fiber spinning apparatus 1 comprising an extruder 10 that prepares a molten blend of polyamide and poly(phenylene ether)-polysiloxane block copolymer reaction product; a metering pump 20 that controls the flow of the molten blend from the extruder; a filter pack 30 that removes from the molten blend insoluble particles with the potential to interfere with fiber spinning; spinneret 40 through which individual fibers (or monofilaments) 50 are extruded; convergence guide 60 which combines individual fibers 50 to form a yarn 70; finish applicator 80 which can, optionally, apply a finish to the yarns (in these experiments no finish was applied to the yarns); denier roll 90, feed roll 100, draw roll 110, and relax roll 120 to lengthen the yarn; and bobbin 130 to gather the lengthened yarn. The fibers thus obtained were evaluated according to the tests reported in Table 4.

In Table 4, temperature, expressed in units of degrees centigrade, is measured downstream of the extruder and upstream of the metering pump; pack pressure, expressed in units of megapascals, is measured just upstream of the filter pack; melt pump speed, expressed in units of rotations per minute, is the metering pump motor rotation rate; denier roll speed, expressed in units of meters/minute is the take-up rate of the denier roll; and winder speed, expressed in units of meters/minute, is the rate at which the extruded fiber is collected on the bobbins.

Denier Per Filament (dpf) is a measure of the mass of a 9,000 meter long individual filament or individual staple fiber if it were continuous. The dpf is determined by dividing the yarn denier by the number of filaments in the yarn. Denier per filament was determined by winding the fiber bundle onto a 1 meter circumference wheel for 90 revolutions. This sample is weighed in grams, multiplied by 100 and then divided by the number of fibers in the bundle, 144, to determine the dpf.

Draw ratio - While extruded fibers are solidifying, or in some cases even after they have hardened, the filaments may be drawn to impart strength. Drawing pulls the molecular chains together and orients them along the fiber axis, creating a considerably stronger yarn. The draw ratio is expressed as (final length after the draw : the initial length before the draw).

Maximum load - This is the load measured when the slope of the stress strain curve is zero. This is generated using an Instron 5500 Series Electromechanical Testing System with the tensile stress strain curve and properties generated using the Intron Bluehill analysis system. The units are in grams force.

Tenacity is the maximum specific strength of a fiber or yarn that is developed in a tensile test taken to rupture point. Here, the objective measure of tenacity is the maximum load divided by the total denier (i.e., load at rupture; expressed in grams per denier) for a yarn containing 144 filaments.

Strain at maximum load is defined as the percent elongation of the material at the point of maximum load.

Results are summarized in Table 4. Using the Example 2 composition, it was possible to spin fibers with a variety of fiber diameters (Examples 4-7), including fiber as small as 2.4 dpf. The fibers produced from the Example 2 composition could be collected on bobbins. For the Example 2 composition, pack pressure climbed very slowly during the spinning process, taking about 30 hours to reach a threshold of 15.9 megapascals (2300 pounds per square inch). It was not possible to produce continuous fibers from the Comparative Example 9 composition, because of rapid pack pressure build up and frequent strand breaks. Accordingly, no fiber properties are available for Comparative Example 9.

**Table 4**

| | Ex. 4 | Ex. 5 | Ex. 6 | Ex. 7 | C. Ex. 11 |
|---|---|---|---|---|---|
| Composition | Ex. 2 | Ex. 2 | Ex. 2 | Ex. 2 | C. Ex. 9 |
| Temp. (°C) | 283.0 | 283.0 | 283.0 | 283.0 | 283.0 |
| Pack pressure (MPa) | 3.00 | 3.31 | 3.17 | 3.17 | -- |
| Melt pump speed (rpm) | 11.0 | 11.0 | 9.0 | 11.0 | -- |
| Denier roll speed (m/min) | 900.0 | 600.0 | 900.0 | 900.0 | -- |
| Winder speed (m/min) | 900.00 | 900.00 | 2300.0 | 2300.0 | -- |
| Drawing ratio | 1.0 | 1.5 | 2.6 | 2.6 | -- |
| dpf (g/9000 m) | 8.0 | 8.2 | 2.4 | 3.2 | -- |
| Max. load (gf) | 693.9 | 1272.3 | 675.4 | 928.3 | -- |
| Tenacity (g/den) | 0.6 | 1.1 | 2.0 | 2.0 | -- |
| Strain at max. load (%) | 388.6 | 253.6 | 41.7 | 54.7 | -- |

The flammability of fibers prepared from the Example 2 and Comparative Example 7 (neat polyamide-6,6) compositions was evaluated as follows. Multifilaments containing 90 bundles of 144 filaments each were prepared from each composition. A length of yarn was suspended vertically, and a natural gas flame was applied to the bottom end of the yarn for 10 seconds. The yarn prepared from the Example 2 composition self-extinguished within a few seconds of the flame being removed from the yarn, and no dripping of flaming droplets was observed. The yarn prepared from the Comparative Example 7 composition (neat polyamide-6,6) burned slowly and dripped flaming droplets while the flame was applied, and after the flame was removed molten flaming droplets continued to drip and ignited a cotton ball under the yarn.

## Claims

1. A fiber comprising a composition comprising the product of melt blending:
58 to 93.9 weight percent of a polyamide selected from the group consisting of polyamide-6, polyamide-6,6, and combinations thereof;
5 to 35 weight percent of a poly(phenylene ether)-polysiloxane block copolymer reaction product comprising
a poly(phenylene ether) and
a poly(phenylene ether)-polysiloxane block copolymer;
1 to 10 weight percent of a flame retardant comprising a metal dialkylphosphinate; and
0.1 to 2 weight percent of a compatibilizing agent for the polyamide and the poly(phenylene ether)-polysiloxane block copolymer reaction product;
wherein all weight percents are based on the total weight of the composition; and
wherein the composition comprises a continuous phase comprising the polyamide, and a disperse phase comprising the poly(phenylene ether)-polysiloxane block copolymer reaction product; wherein the disperse phase particles have a mean cross-sectional area less than or equal to 0.9 micrometer², based on the number of disperse phase particles, as measured by scanning electron microscopy.

2. The fiber of claim 1, wherein said melt blending comprises
melt blending the poly(phenylene ether)-polysiloxane block copolymer reaction product, the flame retardant, and the compatibilizing agent with 15 to 70 weight percent of the polyamide, based on the weight of the polyamide, to form an intermediate composition; and
melt blending the intermediate composition with the remainder of the polyamide to form the composition.

3. The fiber of embodiment 1, wherein the amount of polyamide is 66 to 82.8 weight percent; wherein the polyamide is a polyamide-6,6 having a relative viscosity of 20 to 50 measured at 23°C according to ASTM D789-07 in 90% formic acid; wherein the amount of the poly(phenylene ether)-polysiloxane block copolymer reaction product is 15 to 25 weight percent; wherein the poly(phenylene ether)-polysiloxane block copolymer comprises a poly(phenylene ether) block comprising 2,6-dimethyl-1,4-phenylene ether repeating units, 2,3,6-trimethyl-1,4-phenylene ether repeating units, or a combination thereof; wherein the poly(phenylene ether)-polysiloxane block copolymer further comprises a polysiloxane block comprising repeating units having the structure 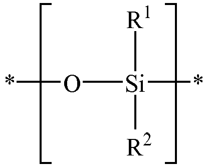 wherein each occurrence of R¹ and R² is independently hydrogen, C₁-C₁₂ hydrocarbyl, or C₁-C₁₂ halohydrocarbyl; wherein the polysiloxane block further comprises a terminal unit having the structure 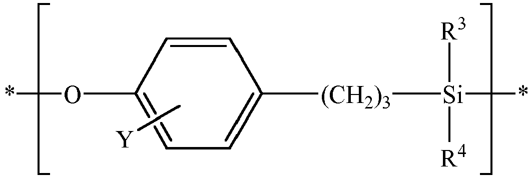 wherein Y is hydrogen, C₁-C₁₂ hydrocarbyl, C₁-C₁₂ hydrocarbyloxy, or halogen, and wherein each occurrence of R³ and R⁴ is independently hydrogen, C₁-C₁₂ hydrocarbyl, or C₁-C₁₂ halohydrocarbyl; wherein the amount of flame retardant is 2 to 8 weight percent; wherein the flame retardant consists of aluminum tris(diethylphosphinate); wherein the amount of compatibilizing agent is 0.2 to 1 weight percent; wherein the compatibilizing agent comprises fumaric acid; wherein the composition comprises a continuous phase comprising the polyamide-6,6, and a disperse phase comprising the poly(phenylene ether)-polysiloxane block copolymer reaction product; and wherein the disperse phase particles have a mean cross-sectional area less than or equal to 0.7 micrometer², based on the number of disperse phase particles, as measured by scanning electron microscopy.

4. The fiber of claim 3, wherein said melt blending comprises
melt blending the poly(phenylene ether)-polysiloxane block copolymer reaction product, the flame retardant, and the compatibilizing agent with 20 to 60 weight percent of the polyamide-6,6, based on the weight of the polyamide-6,6, to form an intermediate composition; and
melt blending the intermediate composition with the remainder of the polyamide-6,6 to form the composition.

5. A yarn comprising the fiber of any of claims 1-4.

6. A fabric comprising the fiber of any of claims 1-4.

7. An article comprising the fiber of any of claims 1-4.

8. A composition comprising the product of melt blending:
58 to 93.9 weight percent of a polyamide selected from the group consisting of polyamide-6, polyamide-6,6, and combinations thereof;
5 to 35 weight percent of a poly(phenylene ether)-polysiloxane block copolymer reaction product comprising
a poly(phenylene ether) and
a poly(phenylene ether)-polysiloxane block copolymer;
1 to 10 weight percent of a flame retardant comprising a metal dialkylphosphinate; and
0.1 to 2 weight percent of a compatibilizing agent for the polyamide and the poly(phenylene ether)-polysiloxane block copolymer reaction product;
wherein all weight percents are based on the total weight of the composition; and
wherein the composition comprises a continuous phase comprising the polyamide, and a disperse phase comprising the poly(phenylene ether)-polysiloxane block copolymer reaction product; wherein the disperse phase particles have a mean cross-sectional area less than or equal to 0.9 micrometer², based on the number of disperse phase particles, as measured by scanning electron microscopy.

9. The composition of claim 8, wherein said melt blending comprises
melt blending the poly(phenylene ether)-polysiloxane block copolymer reaction product, the flame retardant, and the compatibilizing agent with 20 to 60 weight percent of the polyamide, based on the weight of the polyamide, to form an intermediate composition; and
melt blending the intermediate composition with the remainder of the polyamide to form the composition.

10. The composition of claim 8,
wherein the amount of the polyamide is 66 to 82.8 weight percent;
wherein the polyamide is polyamide-6,6 having a relative viscosity of 20 to 50 measured at 23°C according to ASTM D789-07 in 90% formic acid;
wherein the amount of the poly(phenylene ether)-polysiloxane block copolymer reaction product is 15 to 25 weight percent;
wherein the poly(phenylene ether)-polysiloxane block copolymer comprises a poly(phenylene ether) block comprising 2,6-dimethyl-l,4-phenylene ether repeating units, 2,3,6-trimethyl-1,4-phenylene ether repeating units, or a combination thereof; wherein the poly(phenylene ether)-polysiloxane block copolymer comprises a polysiloxane block comprising repeating units having the structure 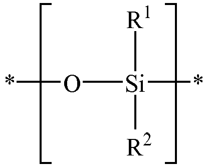 wherein each occurrence of R¹ and R² is independently hydrogen, C₁-C₁₂ hydrocarbyl, or C₁-C₁₂ halohydrocarbyl; and wherein the polysiloxane block further comprises a terminal unit having the structure 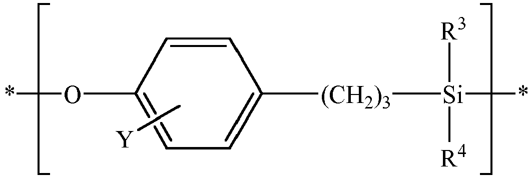 wherein Y is hydrogen, C₁-C₁₂ hydrocarbyl, C₁-C₁₂ hydrocarbyloxy, or halogen, and wherein each occurrence of R³ and R⁴ is independently hydrogen, C₁-C₁₂ hydrocarbyl, or C₁-C₁₂ halohydrocarbyl;
wherein the amount of the flame retardant is 2 to 8 weight percent;
wherein the flame retardant consists of aluminum tris(diethylphosphinate);
wherein the amount of the compatibilizing agent is 0.2 to 1 weight percent; and
wherein the compatibilizing agent comprises fumaric acid.

11. The composition of claim 10, wherein said melt blending comprises
melt blending the poly(phenylene ether)-polysiloxane block copolymer reaction product, the flame retardant, and the compatibilizing agent with 20 to 60 weight percent of the polyamide-6,6, based on the weight of the polyamide-6,6, to form an intermediate composition; and
melt blending the intermediate composition with the remainder of the polyamide-6,6 to form the composition.

12. A method of forming a composition, the method comprising:
melt blending
58 to 93.9 weight percent of a polyamide selected from the group consisting of polyamide-6, polyamide-6,6, and combinations thereof;
5 to 35 weight percent of a poly(phenylene ether)-polysiloxane block copolymer reaction product comprising a poly(phenylene ether) and a poly(phenylene ether)-polysiloxane block copolymer;
1 to 10 weight percent of a flame retardant comprising a metal dialkylphosphinate; and
0.1 to 2 weight percent of a compatibilizing agent for the polyamide and the poly(phenylene ether)-polysiloxane block copolymer reaction product;
wherein all weight percents are based on the total weight of the composition; and
wherein the composition comprises a continuous phase comprising the polyamide, and a disperse phase comprising the poly(phenylene ether)-polysiloxane block copolymer reaction product; wherein the disperse phase comprises particles having a mean cross-sectional area less than or equal to 0.9 micrometer², as measured by scanning electron microscopy.

13. The method of claim 12,
wherein the amount of the polyamide is 66 to 82.8 weight percent;
wherein the polyamide is a polyamide-6,6 having a relative viscosity of 20 to 50 measured at 23°C according to ASTM D789-07 in 90% formic acid;
wherein the amount of the poly(phenylene ether)-polysiloxane block copolymer reaction product is 15 to 25 weight percent;
wherein the poly(phenylene ether)-polysiloxane block copolymer comprises a poly(phenylene ether) block comprising 2,6-dimethyl-1,4-phenylene ether repeating units, 2,3,6-trimethyl-1,4-phenylene ether repeating units, or a combination thereof; wherein the poly(phenylene ether)-polysiloxane block copolymer comprises a polysiloxane block comprising repeating units having the structure 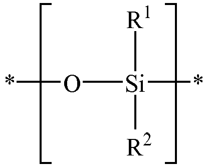 wherein each occurrence of R¹ and R² is independently hydrogen, C₁-C₁₂ hydrocarbyl, or C₁-C₁₂ halohydrocarbyl; and wherein the polysiloxane block further comprises a terminal unit having the structure 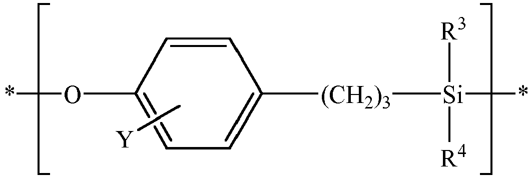 wherein Y is hydrogen, C₁-C₁₂ hydrocarbyl, C₁-C₁₂ hydrocarbyloxy, or halogen, and wherein each occurrence of R³ and R⁴ is independently hydrogen, C₁-C₁₂ hydrocarbyl, or C₁-C₁₂ halohydrocarbyl;
wherein the amount of the flame retardant is 2 to 8 weight percent;
wherein the flame retardant consists of the metal dialkylphosphinate;
wherein the amount of the compatibilizing agent is 0.2 to 1 weight percent; and wherein the compatibilizing agent comprises fumaric acid.

14. The method of claim 13, wherein said melt blending comprises
melt blending the poly(phenylene ether)-polysiloxane block copolymer reaction product, the flame retardant, and the compatibilizing agent with 20 to 60 weight percent of the polyamide-6,6, based on the weight of the polyamide-6,6, to form an intermediate composition; and
melt blending the intermediate composition with the remainder of the polyamide-6,6 to form the composition.

## Patentansprüche

1. Faser, umfassend eine Zusammensetzung, umfassend das Produkt des Schmelzmischens von:
58 bis 93,9 Gewichtsprozent eines Polyamids ausgewählt aus der Gruppe bestehend aus Polyamid-6, Polyamid-6,6 und Kombinationen davon;
5 bis 35 Gewichtsprozent eines Poly(phenylenether)-Polysiloxan-BlockCopolymer-Reaktionsprodukts umfassend
einen Poly(phenylenether) und
ein Poly(phenylenether)-Polysiloxan-Block-Copolymer;
1 bis 10 Gewichtsprozent eines Flammschutzmittels umfassend ein Metalldialkylphosphinat; und
0,1 bis 2 Gewichtsprozent eines Verträglichkeitsmachers bzw. Kompatibilisierungsmittels für das Polyamid und das Poly(phenylenether)-Polysiloxan-BlockCopolymer-Reaktionsprodukt;
wobei alle Gewichtsprozentangaben auf das Gesamtgewicht der Zusammensetzung bezogen sind; und
wobei die Zusammensetzung eine das Polyamid umfassende kontinuierliche Phase und eine das Poly(phenylenether)-Polysiloxan-Block-Copolymer-Reaktionsprodukt umfassende disperse Phase umfasst; wobei die disperse Phase Teilchen mit einer mittleren Querschnittsfläche von weniger als oder gleich 0,9 Mikrometer², bezogen auf die Anzahl der Teilchen der dispersen Phase wie durch Rasterelektronenmikroskopie gemessen, aufweist.

2. Faser nach Anspruch 1, wobei das Schmelzmischen umfasst
Schmelzmischen des Poly(phenylenether)-Polysiloxan-Block-Copolymer-Reaktionsprodukts, des Flammschutzmittels und des Verträglichkeitsmachers mit 15 bis 70 Gewichtsprozent des Polyamids, bezogen auf das Gewicht des Polyamids, unter Bildung einer intermediären Zusammensetzung; und
Schmelzmischen der intermediären Zusammensetzung mit dem Rest des Polyamids unter Bildung der Zusammensetzung.

3. Faser nach Ausführungsform 1, wobei die Menge an Polyamid 66 bis 82,8 Gewichtsprozent beträgt; wobei das Polyamid ein Polyamid-6,6 mit einer relativen Viskosität von 20 bis 50 gemessen bei 23°C gemäß ASTM D789-07 in 90 %-iger Ameisensäure ist; wobei die Menge des Poly(phenylenether)-Polysiloxan-BlockCopolymer-Reaktionsprodukts 15 bis 25 Gewichtsprozent beträgt; wobei das Poly(phenylenether)-Polysiloxan-Block-Copolymer einen Poly(phenylenether)-Block umfasst, der 2,6-Dimethyl-1,4-phenylenether-Wiederholungseinheiten, 2,3,6-Trimethyl-1,4-phenylenether-Wiederholungseinheiten, oder eine Kombination davon umfasst; wobei das Poly(phenylenether)-Polysiloxan-BlockCopolymer weiterhin einen Polysiloxan-Block umfasst, der Wiederholungseinheiten mit der Struktur 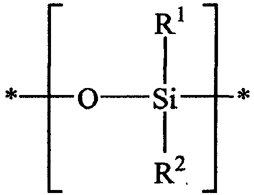 umfasst, wobei jedes Auftreten von R¹ und R² unabhängig Wasserstoff, C₁-C₁₂-Hydrocarbyl oder C₁-C₁₂-Halogenhydrocarbyl bedeutet; wobei der Polysiloxan-Block weiterhin eine terminale Einheit mit der Struktur 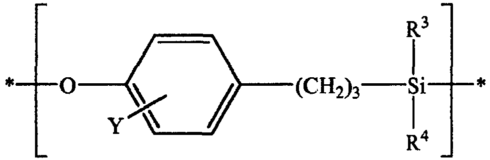 umfasst, wobei Y Wasserstoff, C₁-C₁₂-Hydrocarbyl, C₁-C₁₂-Hydrocarbyloxy oder Halogen ist, und wobei jedes Auftreten von R³ und R⁴ unabhängig Wasserstoff, C₁-C₁₂-Hydrocarbyl oder C₁-C₁₂-Halogenhydrocarbyl bedeutet; wobei die Menge an Flammschutzmittel 2 bis 8 Gewichtsprozent beträgt; wobei das Flammschutzmittel aus Aluminiumtris(diethylphosphinat) besteht; wobei die Menge an Verträglichkeitsmacher 0,2 bis 1 Gewichtsprozent beträgt; wobei der Verträglichkeitsmacher Fumarsäure umfasst; wobei die Zusammensetzung eine das Polyamid-6,6 umfassende kontinuierliche Phase und eine das Poly(phenylenether)-Polysiloxan-Block-Copolymer-Reaktionsprodukt umfassende disperse Phase umfasst; und wobei die Teilchen der dispersen Phase eine mittlere Querschnittsfläche von weniger als oder gleich 0,7 Mikrometer², bezogen auf die Anzahl der Teilchen der dispersen Phase wie durch Rasterelektronenmikroskopie gemessen, aufweisen.

4. Faser nach Anspruch 3, wobei das Schmelzmischen umfasst
Schmelzmischen des Poly(phenylenether)-Polysiloxan-Block-Copolymer-Reaktionsprodukts, des Flammschutzmittels und des Verträglichkeitsmachers mit 20 bis 60 Gewichtsprozent des Polyamid-6,6, bezogen auf das Gewicht des Polyamid-6,6, unter Bildung einer intermediären Zusammensetzung; und
Schmelzmischen der intermediären Zusammensetzung mit dem Rest des Polyamid-6,6 unter Bildung der Zusammensetzung.

5. Garn, umfassend die Faser nach irgendeinem der Ansprüche 1 bis 4.

6. Stoff bzw. Gewebe, umfassend die Faser nach irgendeinem der Ansprüche 1 bis 4.

7. Gegenstand, umfassend die Faser nach irgendeinem der Ansprüche 1 bis 4.

8. Zusammensetzung, umfassend das Produkt des Schmelzmischens von:
58 bis 93,9 Gewichtsprozent eines Polyamids ausgewählt aus der Gruppe bestehend aus Polyamid-6, Polyamid-6,6 und Kombinationen davon;
5 bis 35 Gewichtsprozent eines Poly(phenylenether)-Polysiloxan-BlockCopolymer-Reaktionsprodukts umfassend
einen Poly(phenylenether) und
ein Poly(phenylenether)-Polysiloxan-Block-Copolymer;
1 bis 10 Gewichtsprozent eines Flammschutzmittels umfassend ein Metalldialkylphosphinat; und
0,1 bis 2 Gewichtsprozent eines Verträglichkeitsmachers für das Polyamid und das Poly(phenylenether)-Polysiloxan-Block-Copolymer-Reaktionsprodukt;
wobei alle Gewichtsprozentangaben auf das Gesamtgewicht der Zusammensetzung bezogen sind; und
wobei die Zusammensetzung eine das Polyamid umfassende kontinuierliche Phase und eine das Poly(phenylenether)-Polysiloxan-Block-Copolymer-Reaktionsprodukt umfassende disperse Phase umfasst; wobei die Teilchen der dispersen Phase eine mittlere Querschnittsfläche von weniger als oder gleich 0,9 Mikrometer², bezogen auf die Anzahl der Teilchen der dispersen Phase wie durch Rasterelektronenmikroskopie gemessen, aufweisen.

9. Zusammensetzung nach Anspruch 8, wobei das Schmelzmischen umfasst
Schmelzmischen des Poly(phenylenether)-Polysiloxan-Block-Copolymer-Reaktionsprodukts, des Flammschutzmittels und des Verträglichkeitsmachers mit 20 bis 60 Gewichtsprozent des Polyamids, bezogen auf das Gewicht des Polyamids, unter Bildung einer intermediären Zusammensetzung; und
Schmelzmischen der intermediären Zusammensetzung mit dem Rest des Polyamids unter Bildung der Zusammensetzung.

10. Zusammensetzung nach Anspruch 8,
wobei die Menge des Polyamids 66 bis 82,8 Gewichtsprozent beträgt;
wobei das Polyamid Polyamid-6,6 mit einer relativen Viskosität von 20 bis 50 gemessen bei 23 °C gemäß ASTM D789-07 in 90 %-iger Ameisensäure ist;
wobei die Menge des Poly(phenylenether)-Polysiloxan-Block-Copolymer-Reaktionsprodukts 15 bis 25 Gewichtsprozent beträgt;
wobei das Poly(phenylenether)-Polysiloxan-Block-Copolymer einen Poly(phenylenether)-Block umfasst, der 2,6-Dimethyl-1,4-phenylenether-Wiederholungseinheiten, 2,3,6-Trimethyl-1,4-phenylenether-Wiederholungseinheiten oder eine Kombination davon umfasst; wobei das Poly(phenylenether)-Polysiloxan-Block-Copolymer einen Polysiloxan-Block umfasst, der Wiederholungseinheiten mit der Struktur 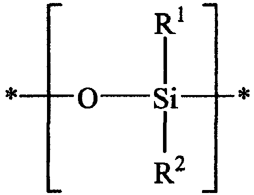 umfasst, wobei jedes Auftreten von R¹ und R² unabhängig Wasserstoff, C₁-C₁₂-Hydrocarbyl oder C₁-C₁₂-Halogenhydrocarbyl bedeutet; und wobei der Polysiloxan-Block weiterhin eine terminale Einheit mit der Struktur 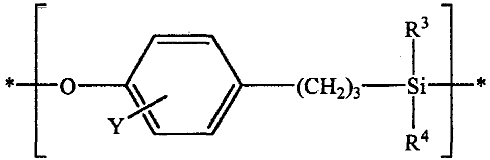 umfasst, wobei Y Wasserstoff, C₁-C₁₂-Hydrocarbyl, C₁-C₁₂-Hydrocarbyloxy oder Halogen ist, und wobei jedes Auftreten von R³ und R⁴ unabhängig Wasserstoff, C₁-C₁₂-Hydrocarbyl oder C₁-C₁₂-Halogenhydrocarbyl bedeutet;
wobei die Menge an dem Flammschutzmittel 2 bis 8 Gewichtsprozent beträgt;
wobei das Flammschutzmittel aus Aluminiumtris(diethylphosphinat) besteht;
wobei die Menge des Verträglichkeitsmachers 0,2 bis 1 Gewichtsprozent beträgt; und
wobei der Verträglichkeitsmacher Fumarsäure umfasst.

11. Zusammensetzung nach Anspruch 10, wobei das Schmelzmischen umfasst
Schmelzmischen des Poly(phenylenether)-Polysiloxan-Block-Copolymer-Reaktionsprodukts, das Flammschutzmittels und des Verträglichkeitsmachers mit 20 bis 60 Gewichtsprozent des Polyamid-6,6, bezogen auf das Gewicht des Polyamid-6,6, unter Bildung einer intermediären Zusammensetzung; und
Schmelzmischen der intermediären Zusammensetzung mit dem Rest des Polyamid-6,6 unter Bildung der Zusammensetzung.

12. Verfahren zur Bildung einer Zusammensetzung, wobei das Verfahren umfasst:
Schmelzmischen von
58 bis 93,9 Gewichtsprozent eines Polyamids ausgewählt aus der Gruppe bestehend aus Polyamid-6, Polyamid-6,6 und Kombinationen davon;
5 bis 35 Gewichtsprozent eines Poly(phenylenether)-Polysiloxan-BlockCopolymer-Reaktionsprodukts umfassend
einen Poly(phenylenether) und
ein Poly(phenylenether)-Polysiloxan-Block-Copolymer;
1 bis 10 Gewichtsprozent eines Flammschutzmittels umfassend ein Metalldialkylphosphinat; und
0,1 bis 2 Gewichtsprozent eines Verträglichkeitsmachers bzw. Kompatibilisierungsmittels für das Polyamid und das Poly(phenylenether)-Polysiloxan-BlockCopolymer-Reaktionsprodukt;
wobei alle Gewichtsprozentangaben auf das Gesamtgewicht der Zusammensetzung bezogen sind; und
wobei die Zusammensetzung eine das Polyamid umfassende kontinuierliche Phase und eine das Poly(phenylenether)-Polysiloxan-Block-Copolymer-Reaktionsprodukt umfassende disperse Phase umfasst; wobei die disperse Phase Teilchen mit einer mittleren Querschnittsfläche von weniger als oder gleich 0,9 Mikrometer², wie durch Rasterelektronenmikroskopie gemessen, umfasst.

13. Verfahren nach Anspruch 12,
wobei die Menge des Polyamids 66 bis 82,8 Gewichtsprozent beträgt;
wobei das Polyamid Polyamid-6,6 mit einer relativen Viskosität von 20 bis 50 gemessen bei 23 °C gemäß ASTM D789-07 in 90 %-iger Ameisensäure ist;
wobei die Menge des Poly(phenylenether)-Polysiloxan-Block-Copolymer-Reaktionsprodukts 15 bis 25 Gewichtsprozent beträgt;
wobei das Poly(phenylenether)-Polysiloxan-Block-Copolymer einen Poly(phenylenether)-Block umfasst, der 2,6-Dimethyl-1,4-phenylenether-Wiederholungseinheiten, 2,3,6-Trimethyl-1,4-phenylenether-Wiederholungseinheiten oder eine Kombination davon umfasst; wobei das Poly(phenylenether)-Polysiloxan-Block-Copolymer einen Polysiloxan-Block umfasst, der Wiederholungseinheiten mit der Struktur 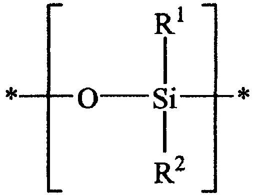 umfasst, wobei jedes Auftreten von R¹ und R² unabhängig Wasserstoff, C₁-C₁₂-Hydrocarbyl oder C₁-C₁₂-Halogenhydrocarbyl bedeutet; und wobei der Polysiloxan-Block weiterhin eine terminale Einheit mit der Struktur 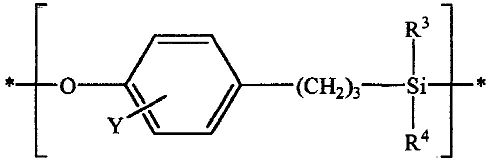 umfasst, wobei Y Wasserstoff, C₁-C₁₂-Hydrocarbyl, C₁-C₁₂-Hydrocarbyloxy oder Halogen ist, und wobei jedes Auftreten von R³ und R⁴ unabhängig Wasserstoff, C₁-C₁₂-Hydrocarbyl oder C₁-C₁₂-Halogenhydrocarbyl bedeutet;
wobei die Menge an dem Flammschutzmittel 2 bis 8 Gewichtsprozent beträgt;
wobei das Flammschutzmittel aus dem Metalldialkylphosphinat besteht;
wobei die Menge des Verträglichkeitsmachers 0,2 bis 1 Gewichtsprozent beträgt; und
wobei der Verträglichkeitsmacher Fumarsäure umfasst.

14. Verfahren nach Anspruch 13, wobei das Schmelzmischen umfasst
Schmelzmischen des Poly(phenylenether)-Polysiloxan-Block-Copolymer-Reaktionsprodukts, des Flammschutzmittels und des Verträglichkeitsmachers mit 20 bis 60 Gewichtsprozent des Polyamid-6,6, bezogen auf das Gewicht des Polyamid-6,6, unter Bildung einer intermediären Zusammensetzung; und
Schmelzmischen der intermediären Zusammensetzung mit dem Rest des Polyamid-6,6 unter Bildung der Zusammensetzung.

## Revendications

1. Fibre comprenant une composition comprenant le produit du mélange à l'état fondu :
de 58 à 93,9 pourcents en poids d'un polyamide choisi dans le groupe consistant en le polyamide-6, le polyamide-6,6 et les combinaisons de ceux-ci ;
de 5 à 35 pourcents en poids d'un produit de la réaction d'un copolymère à blocs poly(phénylène éther)-polysiloxane, comprenant
un poly(phénylène éther), et
un copolymère à blocs poly(phénylène éther)-polysiloxane ;
1 à 20 pourcents en poids d'un retardateur de flamme comprenant un dialkylphosphinate métallique ; et 0,1 à 2 pourcents en poids d'un agent de compatibilisation pour le polyamide et le produit de la réaction d'un copolymère à blocs poly(phénylène éther)-polysiloxane :
dans laquelle tous les pourcentages en poids sont rapportés au poids total de la composition ; et
dans laquelle la composition comprend une phase continue comprenant le polyamide, et une phase dispersée comprenant le produit de la réaction d'un copolymère à blocs poly(phénylène éther)-polysiloxane ; dans laquelle les particules de la phase dispersée ont une aire moyenne en section transversale inférieure ou égale à 0,9 micromètre², sur la base du nombre de particules de la phase dispersée, telle que mesurée par microscopie au microscope électronique à balayage.

2. Fibre selon la revendication 1, dans laquelle ledit mélange à l'état fondu comprend
le mélange à l'état fondu du produit de la réaction d'un copolymère à blocs poly(phénylène éther)-polysiloxane, du retardateur de flamme et de l'agent de compatibilisation, à 15 à 70 pourcents en poids du polyamide, par rapport au poids du polyamide, pour former une composition intermédiaire ; et
le mélange à l'état fondu de la composition intermédiaire au reste du polyamide, pour former la composition.

3. Fibre selon la revendication 1, dans laquelle la quantité du polyamide est de 66 à 82,8 pourcents en poids ; dans laquelle le polyamide est un polyamide-6,6 ayant une viscosité relative de 20 à 50, mesurée à 23°C selon ASTM D789-07 dans de l'acide formique à 90 % ; dans laquelle la quantité du produit de la réaction d'un copolymère à blocs poly(phénylène éther)-polysiloxane est de 15 à 25 pourcents en poids ; dans laquelle le copolymère à blocs poly(phénylène éther)-polysiloxane comprend un bloc poly(phénylène éther) comprenant des motifs répétitifs 2,6-diméthyl-1,4-phénylène éther, des motifs répétitifs 2,3,6-triméthyl-1,4-phénylène éther ou une combinaison de ceux-ci ; dans laquelle le copolymère à blocs poly(phénylène éther)-polysiloxane comprend en outre un bloc polysiloxane comprenant des motifs répétitifs ayant la structure 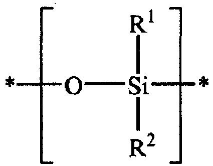 dans laquelle chaque occurrence de R¹ et R² représente d'une manière indépendante un atome d'hydrogène, un groupe hydrocarbyle en C₁-C₁₂ ou halogénohydrocarbyle en C₁-C₁₂ ; dans laquelle le bloc polysiloxane comprend en outre un motif terminal ayant la structure 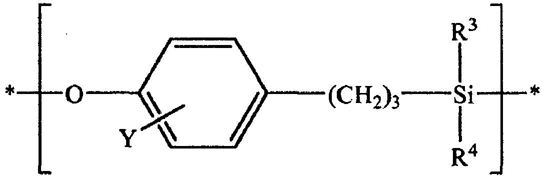 dans laquelle Y est un atome d'hydrogène, un groupe hydrocarbyle en C₁-C₁₂, hydrocarbyloxy en C₁-C₁₂ ou halogéno, et dans laquelle chaque occurrence de R³ et R⁴ représente d'une manière indépendante un atome d'hydrogène, un groupe hydrocarbyle en C₁-C₁₂ ou halogénohydrocarbyle en C₁-C₁₂ ; dans laquelle la quantité du retardateur de flamme est de 2 à 8 pourcents en poids ; dans laquelle le retardateur de flamme consiste en tris(diéthylphosphinate) d'aluminium ; dans laquelle la quantité de l'agent de compatibilisation est de 0,2 à 1 pourcent en poids ; dans laquelle l'agent de compatibilisation comprend de l'acide fumarique ; dans laquelle la composition comprend une phase continue comprenant le polyamide-6,6, et une phase dispersée comprenant le produit de la réaction d'un copolymère à blocs poly(phénylène éther)-polysiloxane ; et dans laquelle les particules de la phase dispersée ont une aire moyenne en section transversale inférieure ou égale à 0,7 micromètre², sur la base du nombre de particules de la phase dispersée, telle que mesurée par microscopie au microscope électronique à balayage.

4. Fibre selon la revendication 3, dans laquelle ledit mélange à l'état fondu comprend
le mélange à l'état fondu du produit de la réaction d'un copolymère à blocs poly(phénylène éther)-polysiloxane, du retardateur de flamme et de l'agent de compatibilisation, à 20 à 60 pourcents en poids du polyamide-6,6, par rapport au poids du polyamide-6,6, pour former une composition intermédiaire ; et
le mélange à l'état fondu de la composition intermédiaire au reste du polyamide-6,6, pour former la composition.

5. Fil comprenant la fibre selon l'une quelconque des revendications 1 à 4.

6. Tissu comprenant la fibre selon l'une quelconque des revendications 1 à 4.

7. Article comprenant la fibre selon l'une quelconque des revendications 1 à 4.

8. Composition comprenant le produit du mélange à l'état fondu :
de 58 à 93,9 pourcents en poids d'un polyamide choisi dans le groupe consistant en le polyamide-6, le polyamide-6,6 et les combinaisons de ceux-ci ;
de 5 à 35 pourcents en poids d'un produit de la réaction d'un copolymère à blocs poly(phénylène éther)-polysiloxane, comprenant
un poly(phénylène éther), et
un copolymère à blocs poly(phénylène éther)-polysiloxane ;
1 à 20 pourcents en poids d'un retardateur de flamme comprenant un dialkylphosphinate métallique ; et 0,1 à 2 pourcents en poids d'un agent de compatibilisation pour le polyamide et le produit de la réaction d'un copolymère à blocs poly(phénylène éther)-polysiloxane :
dans laquelle tous les pourcentages en poids sont rapportés au poids total de la composition ; et
dans laquelle la composition comprend une phase continue comprenant le polyamide, et une phase dispersée comprenant le produit de la réaction d'un copolymère à blocs poly(phénylène éther)-polysiloxane ; dans laquelle les particules de la phase dispersée ont une aire moyenne en section transversale inférieure ou égale à 0,9 micromètre², sur la base du nombre de particules de la phase dispersée, telle que mesurée par microscopie au microscope électronique à balayage.

9. Composition selon la revendication 8, ledit mélange à l'état fondu comprenant :
le mélange à l'état fondu du produit de la réaction d'un copolymère à blocs poly(phénylène éther)-polysiloxane, du retardateur de flamme et de l'agent de compatibilisation, à 20 à 60 pourcents en poids du polyamide-6,6, par rapport au poids du polyamide-6,6, pour former une composition intermédiaire ; et
le mélange à l'état fondu de la composition intermédiaire au reste du polyamide-6,6, pour former la composition.

10. Composition selon la revendication 8,
dans laquelle la quantité du polyamide est de 66 à 82,8 pourcents en poids ; dans laquelle le polyamide est un polyamide-6,6 ayant une viscosité relative de 20 à 50, mesurée à 23°C selon ASTM D789-07 dans de l'acide formique à 90 % ; dans laquelle la quantité du produit de la réaction d'un copolymère à blocs poly(phénylène éther)-polysiloxane est de 15 à 25 pourcents en poids ;
dans laquelle le copolymère à blocs poly(phénylène éther)-polysiloxane comprend un bloc poly(phénylène éther) comprenant des motifs répétitifs 2,6-diméthyl-1,4-phénylène éther, des motifs répétitifs 2,3,6-triméthyl-1,4-phénylène éther ou une combinaison de ceux-ci ; dans laquelle le copolymère à blocs poly(phénylène éther)-polysiloxane comprend en outre un bloc polysiloxane comprenant des motifs répétitifs ayant la structure 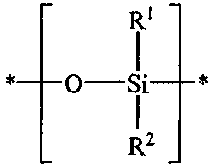 dans laquelle chaque occurrence de R¹ et R² représente d'une manière indépendante un atome d'hydrogène, un groupe hydrocarbyle en C₁-C₁₂ ou halogénohydrocarbyle en C₁-C₁₂ ; dans laquelle le bloc polysiloxane comprend en outre un motif terminal ayant la structure 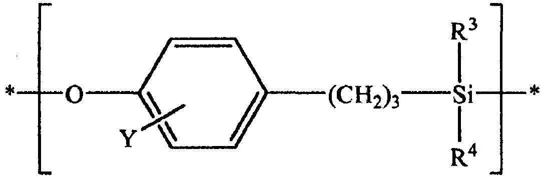 dans laquelle Y est un atome d'hydrogène, un groupe hydrocarbyle en C₁-C₁₂, hydrocarbyloxy en C₁-C₁₂ ou halogéno, et dans laquelle chaque occurrence de R³ et R⁴ représente d'une manière indépendante un atome d'hydrogène, un groupe hydrocarbyle en C₁-C₁₂ ou halogénohydrocarbyle en C₁-C₁₂ ; dans laquelle la quantité du retardateur de flamme est de 2 à 8 pourcents en poids ; dans laquelle le retardateur de flamme consiste en tris(diéthylphosphinate) d'aluminium ; dans laquelle la quantité de l'agent de compatibilisation est de 0,2 à 1 pourcent en poids ; dans laquelle l'agent de compatibilisation comprend de l'acide fumarique.

11. Composition selon la revendication 10, ledit mélange à l'état fondu comprenant
le mélange à l'état fondu du produit de la réaction d'un copolymère à blocs poly(phénylène éther)-polysiloxane, du retardateur de flamme et de l'agent de compatibilisation, à 20 à 60 pourcents en poids du polyamide-6,6, par rapport au poids du polyamide-6,6, pour former une composition intermédiaire ; et
le mélange à l'état fondu de la composition intermédiaire au reste du polyamide-6,6, pour former la composition.

12. Procédé de formation d'une composition, le procédé comprenant :
le mélange à l'état fondu
de 58 à 93,9 pourcents en poids d'un polyamide choisi dans le groupe consistant en le polyamide-6, le polyamide-6,6 et les combinaisons de ceux-ci ;
de 5 à 35 pourcents en poids d'un produit de la réaction d'un copolymère à blocs poly(phénylène éther)-polysiloxane, comprenant un poly(phénylène éther), et un copolymère à blocs poly(phénylène éther)-polysiloxane ;
1 à 10 pourcents en poids d'un retardateur de flamme comprenant un dialkylphosphinate métallique ; et
0,1 à 2 pourcents en poids d'un agent de compatibilisation pour le polyamide et le produit de la réaction d'un copolymère à blocs poly(phénylène éther)-polysiloxane ;
dans laquelle tous les pourcentages en poids sont rapportés au poids total de la composition ; et
dans laquelle la composition comprend une phase continue comprenant le polyamide, et une phase dispersée comprenant le produit de la réaction d'un copolymère à blocs poly(phénylène éther)-polysiloxane ; dans laquelle les particules de la phase dispersée ont une aire moyenne en section transversale inférieure ou égale à 0,9 micromètre², sur la base du nombre de particules de la phase dispersée, telle que mesurée par microscopie au microscope électronique à balayage.

13. Procédé selon la revendication 12,
dans lequel la quantité du polyamide est de 66 à 82,8 pourcents en poids ;
dans lequel le polyamide est un polyamide-6,6 ayant une viscosité relative de 20 à 50, mesurée à 23°C selon ASTM D789-07 dans de l'acide formique à 90 % ;
dans lequel la quantité du produit de la réaction d'un copolymère à blocs poly(phénylène éther)-polysiloxane est de 15 à 25 pourcents en poids ;
dans lequel le copolymère à blocs poly(phénylène éther)-polysiloxane comprend un bloc poly(phénylène éther) comprenant des motifs répétitifs 2,6-diméthyl-1,4-phénylène éther, des motifs répétitifs 2,3,6-triméthyl-1,4-phénylène éther ou une combinaison de ceux-ci ; dans laquelle le copolymère à blocs poly(phénylène éther)-polysiloxane comprend en outre un bloc polysiloxane comprenant des motifs répétitifs ayant la structure 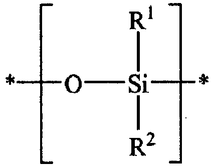 dans laquelle chaque occurrence de R¹ et R² représente d'une manière indépendante un atome d'hydrogène, un groupe hydrocarbyle en C₁-C₁₂ ou halogénohydrocarbyle en C₁-C₁₂ ; dans lequel le bloc polysiloxane comprend en outre un motif terminal ayant la structure 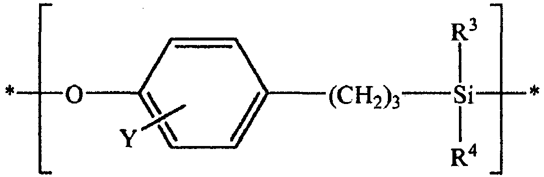 dans laquelle Y est un atome d'hydrogène, un groupe hydrocarbyle en C₁-C₁₂, hydrocarbyloxy en C₁-C₁₂ ou halogéno, et dans laquelle chaque occurrence de R³ et R⁴ représente d'une manière indépendante un atome d'hydrogène, un groupe hydrocarbyle en C₁-C₁₂ ou halogénohydrocarbyle en C₁-C₁₂ ;
dans lequel la quantité du retardateur de flamme est de 2 à 8 pourcents en poids ;
dans lequel le retardateur de flamme consiste en tris(diéthylphosphinate) d'aluminium ;
dans lequel la quantité de l'agent de compatibilisation est de 0,2 à 1 pourcent en poids ;
dans lequel l'agent de compatibilisation comprend de l'acide fumarique.

14. Procédé selon la revendication 13, dans lequel ledit mélange à l'état fondu comprend :
le mélange à l'état fondu du produit de la réaction d'un copolymère à blocs poly(phénylène éther)-polysiloxane, du retardateur de flamme et de l'agent de compatibilisation, à 20 à 60 pourcents en poids du polyamide-6,6, par rapport au poids du polyamide-6,6, pour former une composition intermédiaire ; et
le mélange à l'état fondu de la composition intermédiaire au reste du polyamide-6,6, pour former la composition.
